# EUROPEAN PATENT SPECIFICATION

(11) **EP 4 099 763 B1**
(45) Date of publication and mention of the grant of the patent: **24.07.2024**
(21) Application number: 21760440.4
(22) Date of filing: 26.02.2021
(51) Int. Cl.: H04W 48/08, H04W 48/12, H04W 48/02, H04W 48/10, H04W 48/16, H04W 48/18

(54) **ACCESS METHOD AND APPARATUS**
ZUGANGSVERFAHREN UND -VORRICHTUNG
PROCÉDÉ ET APPAREIL D'ACCÈS

(30) Priority: 27.02.2020 CN 202010125612
(43) Date of publication of application: 07.12.2022
(60) Divisional application: 24176257.4
(73) Proprietor: Huawei Technologies Co., Ltd., Shenzhen, Guangdong 518129 (CN)
(72) Inventor: ZHANG, Yunhao, Shenzhen, Guangdong 518129 (CN); XU, Xiuqiang, Shenzhen, Guangdong 518129 (CN); LUO, Zhe, Shenzhen, Guangdong 518129 (CN)
(74) Representative: Gill Jennings & Every LLP
(86) International application number: PCT/CN2021/078281
(87) International publication number: WO 2021/170118

(56) References cited:
- WO-A1-2019/113753
- CN-A- 108 616 960
- CN-A- 108 702 689
- CN-A- 108 990 133
- CN-A- 109 121 162
- CN-A- 110 831 227
- US-A1- 2011 235 558
- US-A1- 2013 343 319
- US-A1- 2018 199 273
- US-A1- 2019 230 499
- US-A1- 2020 396 672
- HUAWEI ET AL: "PDCCH monitoring under HD FDD and flexible UL DL configuration", vol. RAN WG2, no. Chengdu, China; 20181008 - 20181012, 28 September 2018 (2018-09-28), XP051523355, Retrieved from the Internet <URL:http://www.3gpp.org/ftp/tsg%5Fran/WG2%5FRL2/TSGR2%5F103bis/Docs/R2%2D1813885%2Ezip> [retrieved on 20180928]

## Description

### TECHNICAL FIELD

Embodiments of this application relate to the field of communication technologies, and in particular, to an access method, a communication apparatus, a computer-readable storage medium and a computer program product.

### BACKGROUND

With the development of communication technologies and improvement of user requirements, terminal devices in a communication scenario gradually present characteristics of large quantities and multiple forms. For example, in an industrial automation scenario, there are a large quantity of monitoring devices, machines, and sensors in a factory; in a home and life scenario, there are a large quantity of mobile phones, tablets, wearable devices, smart appliances, and vehicle-mounted terminal devices.
Document US 2013/0343319 A1 discloses an indication method for accessing a cell, a method for selecting a cell and devices, so as to control access of a MTC device, and thus system overhead is reduced.
Document US 2011/0235558 A1 provides methods and apparatus for controlling network access on a contention-based random access channel by MTC devices or other access terminal. More particularly, a type-dependent approach to access control is used to independently control network access by MTC and non-MTC devices.
Document US 2018/0199273 A1 provides a method and apparatus for attempting access to a network, and a method and apparatus for controlling the access, which enable BS efficiently receives/transmits uplink/downlink data and/or uplink/downlink control information using the limited radio resources.
3GPP document R2-1813885 discusses PDCCH monitoring under HD FDD and flexible UL DL configuration. Document WO 2019/113753 A1 relates to a method, device, user equipment and base station for use in shortening access delay.
Document US 2019/0230499 A1 provides methods and apparatus for handling of new UE capability.

### SUMMARY

Embodiments of this application provide an access method and a system, to control, based on characteristic information of a terminal, the terminal accessing a cell, and improve flexibility of traffic control of the cell. The present invention is defined by the attached set of claims. Embodiments and aspects which are not covered by the invention should be considered as examples useful for understanding the invention.

To achieve the foregoing objectives, the following technical solutions are used in embodiments of this application.

According to a first aspect, an embodiment of this application provides an access method. The method may be performed by a terminal, a chip, or another apparatus. The method may include: receiving, in a first cell, first information that is from a network device and that indicates characteristic information of terminals allowed to access the first cell, and determining, based on the first information, whether to enable the terminal to access the first cell, for example, determining whether to initiate a random access procedure in the first cell.

Based on the method provided in the first aspect, the terminal may receive, in a cell, information that is sent by the network device and that indicates characteristic information of terminals allowed to access a cell, and determine, based on the indication of the network device and characteristic information of terminals, whether the terminal can access the cell. In this way, the network device may indicate characteristics of terminals allowed/disallowed to access the cell, so that flexibility of controlling cell access by a network side is improved, and the network side can better perform service control and traffic control.

In a possible design, the first information is carried in a system information block (system information block, SIB), the first information is carried in a paging (paging) message, or the first information is carried in downlink control information (downlink control information, DCI) for scheduling a SIB.

Based on this possible design, the terminal may receive, in an initial access procedure, the first information sent by the network device by using the SIB, or may receive, in a paging process, a first message sent by the network device by using the paging message. In this case, the terminal learns, when performing initial access or receiving the paging message, whether the terminal is rejected to access the cell. When the terminal is rejected to access the cell, a subsequent access procedure is stopped at early time, and the terminal can find that the terminal is rejected to access the cell before performing the random access procedure once, so that power consumption of terminals of this type is reduced. In addition, the first information is sent by using the existing SIB or paging message, and no new signaling message needs to be added, so that signaling overheads of interaction between the terminal and the network device are reduced.

In a possible design, the first information includes the characteristic information of terminals allowed to access the first cell, and/or includes characteristic information of terminals disallowed to access the first cell.

Based on this possible design, the characteristic information of terminals allowed to access the cell and/or the characteristic information of terminals disallowed to access the cell may be carried in the first message, and explicitly indicated to terminals in the cell. To be specific, characteristics that terminals allowed to access the cell has and/or characteristics that terminals disallowed to access the cell has are explicitly indicated. This is simple and easy to implement.

In a possible design, the first information includes a type of terminals allowed to access the first cell, and/or includes a type of terminals disallowed to access the first cell.

Based on this possible design, the type of terminals allowed to access the cell and/or the type of terminals disallowed to access the cell may be carried in the first message and sent to terminals in the cell, to indicate which type of terminals are allowed to access the cell and/or which type of terminals is disallowed to access the cell. A plurality of pieces of characteristic information corresponding to the types do not need to be carried in the first message. Instead, the type indicates whether a type of terminals having a plurality of pieces of characteristic information that are the same are allowed to access the cell. This is simple and easy to implement, and signaling overheads of interaction between the terminal and the network device are reduced.

In a possible design, the first information includes K bits, one of the K bits corresponds to one or more of the M types, and when a value of the bit is T1, terminals allowed to access the first cell has the type corresponding to the bit, or when the value of the bit is T2 or is not T1, terminals disallowed to access the first cell has the type corresponding to the bit. K is an integer greater than or equal to 1, M is an integer greater than or equal to 1, T1 and T2 are integers, and T1 is different from T2.

Based on this possible design, when there are a plurality of types, a value of a bit corresponding to a type indicates whether terminals of this type are allowed to access the cell, so that a limited quantity of bits indicate which type of terminals are allowed to access the cell and/or which type of terminals are disallowed to access the cell, and the signaling overheads of interaction between the terminal and the network device are reduced.

In a possible design, the first information indicates N, and a type of terminals allowed to access the first cell includes N of M types, or a type of terminals disallowed to access the first cell includes N of M types. N is an integer greater than or equal to 1, and M is an integer greater than or equal to 1.

Based on this possible design, when there are a plurality of types, a value of N may indicate that N of all types of terminals are allowed/disallowed to access the cell, so that the signaling overheads of interaction between the terminal and the network device are reduced.

In a possible design, the method further includes: The terminal receives, in the first cell, second indication information that is from the network device and that indicates characteristic information of terminals allowed to access a neighboring cell of the first cell, for example, a second cell.

Based on this possible design, the terminal may further receive related information that is of the neighboring cell of the first cell and that is sent by the network device, for example, the characteristic information of terminals allowed to access the neighboring cell of the first cell. When the terminal is rejected to access the first cell, the terminal may determine, based on the characteristic information of terminals and the related information of the neighboring cell of the first cell, a neighboring cell that terminals are allowed to access, and access the neighboring cell. This resolves a problem of large power consumption caused by blindly searching for an accessible neighboring cell around the first cell for many times by the terminal when the terminal is rejected to access the first cell, and reduces the power consumption of the terminal.

In a possible design, the characteristic information in this embodiment of this application includes a value of one or more of the following parameters: a maximum bandwidth, a minimum bandwidth, an application scenario, a peak rate, a maximum modulation order, a duplex capability, a branch quantity, a supported power level, processing time, whether supplementary uplink (supplementary uplink, SUL) is supported, whether carrier aggregation (carrier aggregation, CA) is supported, and a CA capability.

Based on this possible design, characteristic information of a type of terminals is represented by using related information of one or more parameters. This is simple and easy to implement.

According to a second aspect, this application provides a communication apparatus. The communication apparatus may be a terminal, or a chip or a system-on-a-chip in the terminal, or may be a module or a unit that is in the terminal and that is configured to implement the access method in embodiments of this application. The communication apparatus may implement functions performed by the terminal in the foregoing aspects or the possible designs, and the functions may be implemented by hardware, or may be implemented by hardware executing corresponding software. The hardware or the software includes one or more modules corresponding to the functions. In a design, the apparatus may include modules that are in one-to-one correspondence with the methods/operations/steps/actions described in the first aspect. The modules may be implemented by using a hardware circuit, software, or a combination of the hardware circuit and the software. In a design, the communication apparatus may include a receiving unit and a processing unit.

The receiving unit is configured to receive, in a first cell, first information that is from a network device and that indicates characteristic information of terminals allowed to access the first cell.

The processing unit is configured to determine, based on the first information, whether to access the first cell.

For a specific implementation of the communication apparatus, refer to behavior functions of the terminal in the access method according to any one of the first aspect or the possible designs of the first aspect. Details are not repeated herein again. Therefore, the provided communication apparatus can achieve same beneficial effects as any one of the first aspect or the possible designs of the first aspect.

According to a third aspect, a communication apparatus is provided. The communication apparatus may be a terminal, or a chip or a system-on-a-chip in the terminal. The communication apparatus may implement functions performed by the terminal in the foregoing aspects or the possible designs, and the functions may be implemented by hardware. In a possible design, the communication apparatus may include a processor and a communication interface. The processor may be configured to support the communication apparatus in implementing the functions in any one of the first aspect or the possible designs of the first aspect. For example, the processor is configured to: receive, in a first cell through the communication interface, first information that is from a network device and that indicates characteristic information of terminals allowed to access the first cell, and determine, based on the first information, whether to access the first cell. In another possible design, the communication apparatus may further include a memory, and the memory is configured to store computer instructions and/or data. When the communication apparatus runs, the processor executes the computer instructions stored in the memory, to enable the communication apparatus to perform the access method according to any one of the first aspect or the possible designs of the first aspect. In this embodiment of this application, the communication interface may be a transceiver, an interface circuit, a bus interface, a pin, or another apparatus that can implement transceiver functions.

According to a fourth aspect, a computer-readable storage medium is provided. The computer-readable storage medium stores instructions. When the instructions are run on a computer, the computer is enabled to perform the access method according to any one of the first aspect or the possible designs of the first aspect.

According to a fifth aspect, a computer program product including instructions is provided. The computer program product may include program instructions. When the computer program product runs on a computer, the computer is enabled to perform the access method according to any one of the first aspect or the possible designs of the first aspect.

According to a sixth aspect, a chip system is provided. The chip system includes a processor and a communication interface. The chip system may be configured to implement the functions performed by the terminal in any one of the first aspect or the possible designs of the first aspect. For example, the processor is configured to: receive, in a first cell through the communication interface, first information that is from a network device and that indicates characteristic information of terminals allowed to access the first cell, and determine, based on the first information, whether to access the first cell. In a possible design, the chip system further includes a memory. The memory is configured to store program instructions and/or data. When the chip system runs, the processor executes the program instructions stored in the memory, to enable the chip system to perform the access method according to any one of the seventh aspect or the possible designs of the seventh aspect. The chip system may include a chip, or may include a chip and another discrete component. This is not limited herein.

According to a seventh aspect, an embodiment of this application further provides an access method. The access method may be performed by a network device, a chip, or another apparatus. The method may include: sending, in a first cell to a terminal, first information that indicates characteristic information of terminals allowed to access the first cell. For the first information and a method for transmitting the first information, refer to the descriptions in the first aspect. Details are not described herein again.

In a possible design, the method further includes: The network device sends, to the terminal in the first cell, characteristic information that indicates terminals allowed to access a second cell (a neighboring cell of the first cell).

In a possible design, the characteristic information includes a value of one or more of the following parameters: a maximum bandwidth, a minimum bandwidth, an application scenario, a peak rate, a maximum modulation order, a duplex capability, a branch quantity, a supported power level, processing time, whether SUL is supported, whether CA is supported, and a CA capability.

According to an eighth aspect, this application provides a communication apparatus. The communication apparatus may be a network device, or a chip or a system-on-a-chip in the network device, or may be a module or a unit that is in the network device and that is configured to implement the access method in embodiments of this application. The communication apparatus may implement functions performed by the network device in the foregoing aspects or the possible designs, and the functions may be implemented by hardware, or may be implemented by hardware executing corresponding software. The hardware or the software includes one or more modules corresponding to the functions. In a design, the apparatus may include modules that are in one-to-one correspondence with the methods/operations/steps/actions described in the seventh aspect. The modules may be implemented by using a hardware circuit, software, or a combination of the hardware circuit and the software. In a design, the communication apparatus may include a sending unit.

The sending unit is configured to send, in a first cell to a terminal, first information that indicates characteristic information of terminals allowed to access the first cell.

For a specific implementation of the communication apparatus, refer to the behavior functions of the network device in the access method according to any one of the seventh aspect or the possible designs of the seventh aspect. Details are not described herein again. Therefore, the provided communication apparatus can achieve same beneficial effects as any one of the seventh aspect or the possible designs of the seventh aspect.

According to a ninth aspect, a communication apparatus is provided. The communication apparatus may be a network device, or a chip or a system-on-a-chip in the network device. The communication apparatus may implement the functions performed by the network device in the foregoing aspects or the possible designs, and the functions may be implemented by hardware. In a possible design, the communication apparatus may include a processor and a communication interface. The processor may be configured to support the communication apparatus in implementing the functions in any one of the seventh aspect or the possible designs of the seventh aspect. For example, the processor is configured to send, in a first cell to a terminal through the communication interface, first information that indicates characteristic information of terminals allowed to access the first cell. In another possible design, the communication apparatus may further include a memory, and the memory is configured to store computer instructions and/or data. When the communication apparatus runs, the processor executes the computer instructions stored in the memory, to enable the communication apparatus to perform the access method according to any one of the seventh aspect or the possible designs of the seventh aspect.

According to a tenth aspect, a computer-readable storage medium is provided. The computer-readable storage medium stores instructions. When the instructions are run on a computer, the computer is enabled to perform the access method according to any one of the seventh aspect or the possible designs of the seventh aspect.

According to an eleventh aspect, a computer program product including instructions is provided. The computer program product may include program instructions. When the computer program product runs on a computer, the computer is enabled to perform the access method according to any one of the first aspect or the possible designs of the seventh aspect.

According to a twelfth aspect, a chip system is provided. The chip system includes a processor and a communication interface. The chip system may be configured to implement the functions performed by the network device in any one of the seventh aspect or the possible designs of the seventh aspect. For example, the processor is configured to send, in a first cell to a terminal through the communication interface, first information that indicates characteristic information of terminals allowed to access the first cell. In a possible design, the chip system further includes a memory. The memory is configured to store program instructions and/or data. When the chip system runs, the processor executes the program instructions stored in the memory, to enable the chip system to perform the access method according to any one of the seventh aspect or the possible designs of the seventh aspect. The chip system may include a chip, or may include a chip and another discrete component. This is not limited herein.

According to a thirteenth aspect, an embodiment of this application further provides an access method. The method may be performed by a terminal, a chip, or another apparatus. In a first possible design of the thirteenth aspect, the method includes: sending, in a first cell to a first network device, third information that indicates characteristic information of a terminal; and receiving, in the first cell, a response message that is from the first network device and that indicates whether the terminal is allowed to access the first cell.

In a second possible design of the thirteenth aspect, the method includes: sending, in a first cell, a preamble to a first network device, where a transmission resource for the preamble corresponds to characteristic information of a terminal, or a preamble set to which the preamble belongs corresponds to the characteristic information of the terminal; and receiving, in the first cell, a response message that is from the first network device and that indicates whether the terminal is allowed to access the first cell.

Based on the method provided in the thirteenth aspect, the terminal may send the characteristic information of the terminal to a network device, so that the network device identifies a characteristic of the terminal, determines, based on the characteristic of the terminal, whether to allow access to a cell, and sends, to the terminal, information about whether access to the cell is allowed or rejected. In this case, the terminal accessing the cell is flexibly controlled, and a network side can better perform service control and traffic control. Alternatively, the terminal indicates the characteristic information of the terminal to the network device by using the preamble, so that the network device determines, as early as possible based on the characteristic information of the terminal, whether the terminal is allowed to access the cell, and the terminal learns as early as possible whether the terminal can access the cell, and stops a subsequent random access procedure as early as possible when the terminal cannot access the cell. In this case, power consumption of the terminal is reduced, the terminal that accesses a cell is flexibly controlled, and a network side can better perform service control and traffic control.

With reference to the first possible design of the thirteenth aspect, the third information is carried in Msg3, and the response message is carried in Msg4 or carried in DCI for scheduling Msg4; or the third information is carried in MsgA, and the response message is carried in MsgB or carried in DCI for scheduling MsgB.

Based on this possible design, information about allowing or rejecting the terminal to access a cell may be indicated to the terminal by using Msg2 in a four-step random access procedure or DCI for scheduling Msg2, or information about allowing or rejecting the terminal to access a cell may be indicated to the terminal by using MsgB in a random access response RAR or a two-step random access procedure or DCI for scheduling MsgB. In this way, cell access of the terminal can be controlled by using an existing random access procedure, which is simple and easy to implement. In addition, signaling overheads of interaction between the terminal and the network device are reduced.

With reference to a second possible design of the thirteenth aspect, the response message is carried in Msg2, carried in DCI for scheduling Msg2, or carried in an RAR. To be specific, after receiving Msg1, the network device indicates, as early as possible, whether the terminal is allowed to access the cell. In this way, the terminal learns, as early as possible, whether the terminal can access a cell, and stops a subsequent random access procedure as early as possible when the terminal cannot access the cell, so that power consumption of the terminal is saved.

In a possible design, the method further includes: The terminal receives, in the first cell, second information that is from the first network device and that indicates characteristic information of a terminal allowed to access a second cell, where the second cell is a neighboring cell of the first cell.

Based on this possible design, the terminal may receive related information that is of the neighboring cell of the first cell and that is sent by the network device, for example, the characteristic information of the terminal allowed to access the neighboring cell of the first cell. When the terminal is rejected to access the first cell, the terminal may determine, based on the characteristic information of the terminal and the related information of the neighboring cell of the first cell, a neighboring cell that the terminal is allowed to access, and access the neighboring cell. This resolves a problem of large power consumption caused by blindly searching for an accessible neighboring cell around the first cell for many times by the terminal when the terminal is rejected to access the first cell, and reduces the power consumption of the terminal.

In a possible design, the method further includes: The terminal sends, in the second cell, an identifier of the terminal and cell information of the first cell to a second network device.

Based on this possible design, when accessing a new cell, the terminal may send, to a network device in the new cell, information about the terminal and information about a cell on which the terminal last camps before accessing the new cell. In this way, the network device in the new cell determines, based on the information sent by the terminal, authenticity of the network device accessed by the terminal before the terminal accesses the new cell. When the network device is a pseudo device, a corresponding remedy is taken in time to ensure security of data transmission in a network.

In a possible design, the method further includes: The terminal receives, in the first cell, indication information from the first network device, and sends third information to the first network device based on the indication information, where the indication information indicates a type of a parameter included in the characteristic information.

Based on this possible design, the terminal sends the characteristic information of the terminal to the network device based on the indication of the network device, and the network device manages and controls the characteristic information reported by the terminal, so that flexibility of service control and traffic control performed by the network side on a cell is improved.

In a possible design, the characteristic information includes a value of one or more of the following parameters: a maximum bandwidth, a minimum bandwidth, an application scenario, a peak rate, a maximum modulation order, a duplex capability, a branch quantity, a supported power level, processing time, whether SUL is supported, whether CA is supported, and a CA capability.

Based on this possible design, characteristic information of a type of terminals is represented by using related information of one or more parameters. This is simple and easy to implement.

According to a fourteenth aspect, this application provides a communication apparatus. The communication apparatus may be a terminal, or a chip or a system-on-a-chip in the terminal, or may be a module or a unit that is in the terminal and that is configured to implement the access method in embodiments of this application. The communication apparatus may implement functions performed by the terminal in the foregoing aspects or the possible designs, and the functions may be implemented by hardware, or may be implemented by hardware executing corresponding software. The hardware or the software includes one or more modules corresponding to the functions. In a design, the apparatus may include modules that are in one-to-one correspondence with the methods/operations/steps/actions described in the thirteenth aspect. The modules may be implemented by using a hardware circuit, software, or a combination of the hardware circuit and the software. In a design, for example, the communication apparatus may include a sending unit and a receiving unit.

The sending unit is configured to send, in a first cell to a first network device, third information that indicates characteristic information of the terminal. The receiving unit is configured to receive, in the first cell, a response message that is from the first network device and that indicates whether the terminal is allowed to access the first cell.

Alternatively, the sending unit is configured to send, in a first cell, a preamble to a first network device, where a transmission resource for the preamble corresponds to characteristic information of the terminal, or a preamble set to which the preamble belongs corresponds to the characteristic information of the terminal. The receiving unit is configured to receive, in the first cell, a response message that is from the first network device and that indicates whether the terminal is allowed to access the first cell.

For a specific implementation of the communication apparatus, refer to behavior functions of the terminal in the access method according to any one of the thirteenth aspect or the possible designs of the thirteenth aspect. Details are not repeated herein again.

According to a fifteenth aspect, a communication apparatus is provided. The communication apparatus may be a terminal, or a chip or a system-on-a-chip in the terminal. The communication apparatus may implement functions performed by the terminal in the foregoing aspects or the possible designs, and the functions may be implemented by hardware. In a possible design, the communication apparatus may include a processor and a communication interface. The processor may be configured to support the communication apparatus in implementing the functions in any one of the thirteenth aspect or the possible designs of the thirteenth aspect. For example, the processor is configured to: send, in a first cell to a first network device through the communication interface, third information that indicates characteristic information of the terminal; and receive, in the first cell through the communication interface, a response message that is from the first network device and that indicates whether the terminal is allowed to access the first cell. In another possible design, the communication apparatus may further include a memory, and the memory is configured to store computer instructions and/or data. When the communication apparatus runs, the processor executes the computer instructions stored in the memory, to enable the communication apparatus to perform the access method according to any one of the thirteenth aspect or the possible designs of the thirteenth aspect.

According to a sixteenth aspect, a computer-readable storage medium is provided. The computer-readable storage medium stores instructions. When the instructions are run on a computer, the computer is enabled to perform the access method according to any one of the thirteenth aspect or the possible designs of the thirteenth aspect.

According to a seventeenth aspect, a computer program product including instructions is provided. The computer program product may include program instructions. When the computer program product runs on a computer, the computer is enabled to perform the access method according to any one of the thirteenth aspect or the possible designs of the thirteenth aspect.

According to an eighteenth aspect, a chip system is provided. The chip system includes a processor and a communication interface. The chip system may be configured to implement the functions performed by the terminal in any one of the thirteenth aspect or the possible designs of the thirteenth aspect. For example, the processor is configured to: send, in a first cell to a first network device through the communication interface, third information that indicates characteristic information of a terminal; and receive, in the first cell through the communication interface, a response message that is from the first network device and that indicates whether the terminal is allowed to access the first cell. In a possible design, the chip system further includes a memory. The memory is configured to store program instructions and/or data. When the chip system runs, the processor executes the program instructions stored in the memory, to enable the chip system to perform the access method according to any one of the thirteenth aspect or the possible designs of the thirteenth aspect. The chip system may include a chip, or may include a chip and another discrete component.

According to a nineteenth aspect, an embodiment of this application further provides an access method. The method may be performed by a network device, a chip, or another apparatus. The method includes: receiving, in a first cell from a terminal, third information that indicates characteristic information of the terminal; and sending, in the first cell to the terminal based on the third information, a response message that indicates whether the terminal is allowed to access the first cell. Alternatively, the method includes: receiving, in a first cell, a preamble from a terminal, where a transmission resource for the preamble corresponds to characteristic information of the terminal, or a preamble set to which the preamble belongs corresponds to the characteristic information of the terminal; and sending, in the first cell, a response message to the terminal based on the characteristic information of the terminal, where the response message indicates whether the terminal is allowed to access the first cell.

For the characteristic information of the terminal, the third information, a method for transmitting the third information, and a method for sending the response message, refer to the descriptions in the thirteenth aspect. Details are not described herein again.

In a possible design, the method further includes: The network device sends, in the first cell to the terminal, second information that indicates characteristic information of a terminal allowed to access a second cell, where the second cell is a neighboring cell of the first cell. For the second information and a method for transmitting the second information, refer to the descriptions in the thirteenth aspect. Details are not described herein again.

In a possible design, when the response message indicates to reject the terminal to access the first cell, the method further includes: sending an identifier of the terminal and cell information of the first cell to a second network device.

In a possible design, before the receiving, in a first cell, third information from a terminal, the method further includes: sending, in the first cell, indication information to the terminal. For the indication information and a method for transmitting the indication information, refer to the descriptions in the thirteenth aspect. Details are not described herein again.

According to a twentieth aspect, this application provides a communication apparatus. The communication apparatus may be a network device, or a chip or a system-on-a-chip in the network device, or may be a module or a unit that is in the network device and that is configured to implement the access method in embodiments of this application. The communication apparatus may implement functions performed by the network device in the foregoing aspects or the possible designs, and the functions may be implemented by hardware, or may be implemented by hardware executing corresponding software. The hardware or the software includes one or more modules corresponding to the functions. In a design, the apparatus may include modules that are in one-to-one correspondence with the methods/operations/steps/actions described in the nineteenth aspect. The modules may be implemented by using a hardware circuit, software, or a combination of the hardware circuit and the software. In a design, for example, the communication apparatus may include a sending unit and a receiving unit.

The receiving unit is configured to receive, in a first cell from a terminal, third information that indicates characteristic information of the terminal. The sending unit is configured to send, in the first cell to the terminal based on the third information, a response message that indicates whether the terminal is allowed to access the first cell.

Alternatively, the receiving unit is configured to receive, in a first cell, a preamble from a terminal, where a transmission resource for the preamble corresponds to characteristic information of the terminal, or a preamble set to which the preamble belongs corresponds to the characteristic information of the terminal. The sending unit is configured to send, in the first cell, a response message to the terminal based on the characteristic information of the terminal, where the response message indicates whether the terminal is allowed to access the first cell.

For a specific implementation of the communication apparatus, refer to behavior functions of the terminal in the access method according to any one of the nineteenth aspect or the possible designs of the nineteenth aspect. Details are not repeated herein again.

According to a twenty-first aspect, a communication apparatus is provided. The communication apparatus may be a network device, or a chip or a system-on-a-chip in the network device. The communication apparatus may implement the functions performed by the network device in the foregoing aspects or the possible designs, and the functions may be implemented by hardware. In a possible design, the communication apparatus may include a processor and a communication interface. The processor may be configured to support the communication apparatus in implementing the functions in any one of the nineteenth aspect or the possible designs of the nineteenth aspect. For example, the processor is configured to: receive, in a first cell from a terminal through the communication interface, third information that indicates characteristic information of the terminal, and send, in the first cell to the terminal based on the third information, a response message that indicates whether the terminal is allowed to access the first cell. In another possible design, the communication apparatus may further include a memory, and the memory is configured to store computer instructions and/or data. When the communication apparatus runs, the processor executes the computer instructions stored in the memory, to enable the communication apparatus to perform the access method according to any one of the nineteenth aspect or the possible designs of the nineteenth aspect.

According to a twenty-second aspect, a computer-readable storage medium is provided. The computer-readable storage medium stores instructions. When the instructions are run on a computer, the computer is enabled to perform the access method according to any one of the nineteenth aspect or the possible designs of the nineteenth aspect.

According to a twenty-third aspect, a computer program product including instructions is provided. The computer program product may include program instructions. When the computer program product runs on a computer, the computer is enabled to perform the access method according to any one of the nineteenth aspect or the possible designs of the nineteenth aspect.

According to a twenty-fourth aspect, a chip system is provided. The chip system includes a processor and a communication interface. The chip system may be configured to implement the functions performed by the network device in any one of the nineteenth aspect or the possible designs of the nineteenth aspect. For example, the processor is configured to: receive, in a first cell from a terminal through the communication interface, third information that indicates characteristic information of the terminal, and send, in the first cell to the terminal based on the third information, a response message that indicates whether the terminal is allowed to access the first cell. In a possible design, the chip system further includes a memory. The memory is configured to store program instructions and/or data. When the chip system runs, the processor executes the program instructions stored in the memory, to enable the chip system to perform the access method according to any one of the nineteenth aspect or the possible designs of the nineteenth aspect. The chip system may include a chip, or may include a chip and another discrete component.

According to a twenty-fifth aspect, an embodiment of this application further provides an access method. The access method may be performed by a second network device, a chip, or another apparatus. The method may include: receiving an identifier of a terminal and cell information of a first cell that are from a first network device, and receiving an identifier of the terminal and cell information of the first cell that are from the terminal.

Based on the method in the fifteenth aspect, the second network device receives information about the terminal and information about a cell on which the terminal last camps before the terminal accesses a new cell. In this way, the second network device determines, based on the information sent by the terminal, authenticity of a network device accessed by the terminal before the terminal accesses the new cell. When the network device previously accessed by the terminal is a pseudo device, a corresponding remedy is taken in time to ensure security of data transmission in a network.

The identifier of the terminal may uniquely identify the terminal. The cell information of the first cell may uniquely identify the first cell, and the cell information of the first cell may be a cell ID of the first cell.

According to a twenty-sixth aspect, this application provides a communication apparatus. The communication apparatus may be a network device, or a chip or a system-on-a-chip in the network device, or may be a module or a unit that is in the network device and that is configured to implement the access method in embodiments of this application. The communication apparatus may implement functions performed by the network device in the foregoing aspects or the possible designs, and the functions may be implemented by hardware, or may be implemented by hardware executing corresponding software. The hardware or the software includes one or more modules corresponding to the functions. In a design, the apparatus may include modules that are in one-to-one correspondence with the methods/operations/steps/actions described in the twenty-fifth aspect. The modules may be implemented by using a hardware circuit, software, or a combination of the hardware circuit and the software. In a design, for example, the communication apparatus may include a receiving unit.

The receiving unit is configured to receive an identifier of a terminal and cell information of a first cell that are from a first network device, and receive an identifier of the terminal and cell information of the first cell that are from the terminal.

For a specific implementation of the communication apparatus, refer to behavior functions of the terminal in the access method according to any one of the twenty-fifth aspect or the possible designs of the twenty-fifth aspect. Details are not repeated herein again.

According to a twenty-seventh aspect, a communication apparatus is provided. The communication apparatus may be a network device, or a chip or a system-on-a-chip in the network device. The communication apparatus may implement functions performed by the network device in the foregoing aspects or the possible designs, and the functions may be implemented by hardware. In a possible design, the communication apparatus may include a processor and a communication interface. The processor may be configured to support the communication apparatus in implementing the functions in any one of the twenty-fifth aspect or the possible designs of the twenty-fifth aspect. For example, the processor is configured to: receive, through the communication interface, an identifier of a terminal and cell information of a first cell that are from a first network device, and receive, through the communication interface, an identifier of the terminal and cell information of the first cell that are from the terminal. In another possible design, the communication apparatus may further include a memory, and the memory is configured to store computer instructions and/or data. When the communication apparatus runs, the processor executes the computer instructions stored in the memory, to enable the communication apparatus to perform the access method according to any one of the twenty-fifth aspect or the possible designs of the twenty-fifth aspect.

According to a twenty-eighth aspect, a computer-readable storage medium is provided. The computer-readable storage medium stores instructions. When the instructions are run on a computer, the computer is enabled to perform the access method according to any one of the twenty-fifth aspect or the possible designs of the twenty-fifth aspect.

According to a twenty-ninth aspect, a computer program product including instructions is provided. The computer program product may include program instructions. When the computer program product runs on a computer, the computer is enabled to perform the access method according to any one of the twenty-fifth aspect or the possible designs of the twenty-fifth aspect.

According to a thirtieth aspect, a chip system is provided. The chip system includes a processor and a communication interface. The chip system may be configured to implement the functions performed by the network device in any one of the twenty-fifth aspect or the possible designs of the twenty-fifth aspect. For example, the processor is configured to: receive, through the communication interface, an identifier of a terminal and cell information of a first cell that are from a first network device, and receive, through the communication interface, an identifier of the terminal and cell information of the first cell that are from the terminal. In a possible design, the chip system further includes a memory. The memory is configured to store program instructions and/or data. When the chip system runs, the processor executes the program instructions stored in the memory, to enable the chip system to perform the access method according to any one of the twenty-fifth aspect or the possible designs of the twenty-fifth aspect. The chip system may include a chip, or may include a chip and another discrete component.

According to a thirty-first aspect, an embodiment of this application further provides a communication system. The communication system includes the communication apparatus according to any one of the second aspect to the sixth aspect and the network device according to any one of the eighth aspect to the twelfth aspect; or includes the communication apparatus according to any one of the fourteenth aspect to the eighteenth aspect, and the communication apparatus according to any one of the twentieth aspect to the twenty-fourth aspect, and optionally, may further include the communication apparatus according to any one of the twenty-sixth aspect to the thirtieth aspect.

### BRIEF DESCRIPTION OF DRAWINGS

FIG. 1a is a schematic diagram of a four-step random access procedure;
FIG. 1b is a schematic diagram of a two-step random access procedure;
FIG. 2 is a schematic diagram of an initial access procedure;
FIG. 3 is a schematic diagram of an architecture of a communication system according to an embodiment of this application;
FIG. 4 is a schematic composition diagram of a communication apparatus 400 according to an embodiment of this application;
FIG. 5 is a flowchart of an access method according to an embodiment of this application;
FIG. 6a is a flowchart of an access method according to an embodiment which does not form part of the invention as defined by the appended claims;
FIG. 6b is a flowchart of an access method according to an embodiment which does not form part of the invention as defined by the appended claims;
FIG. 6c is a flowchart of an access method according to an embodiment which does not form part of the invention as defined by the appended claims;
FIG. 7 is a flowchart of another access method according to an embodiment of this application;

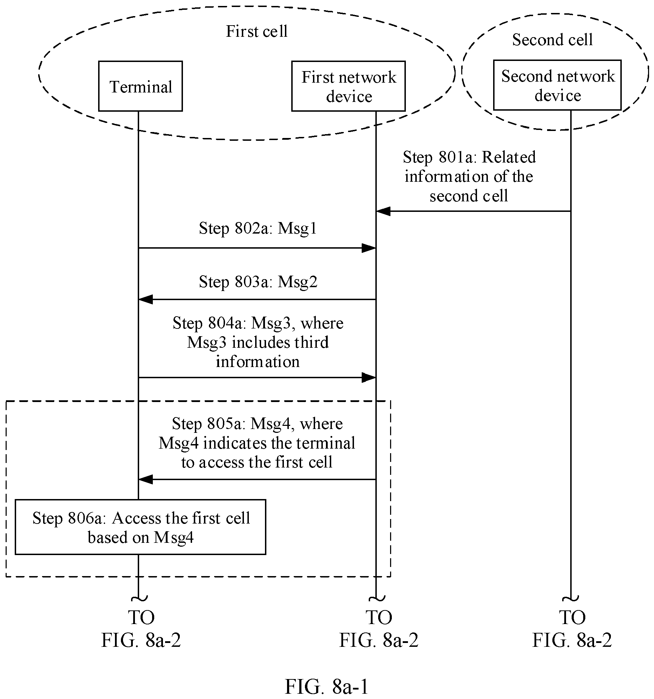

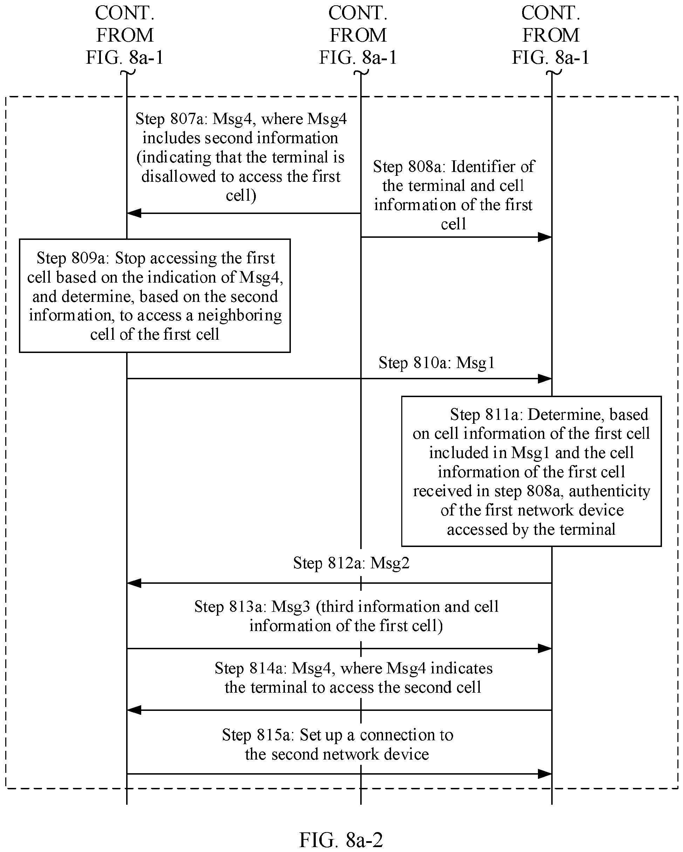

FIG. 8a-1 and FIG. 8a-2 are a flowchart of another access method according to an embodiment which does not form part of the invention as defined by the appended claims;

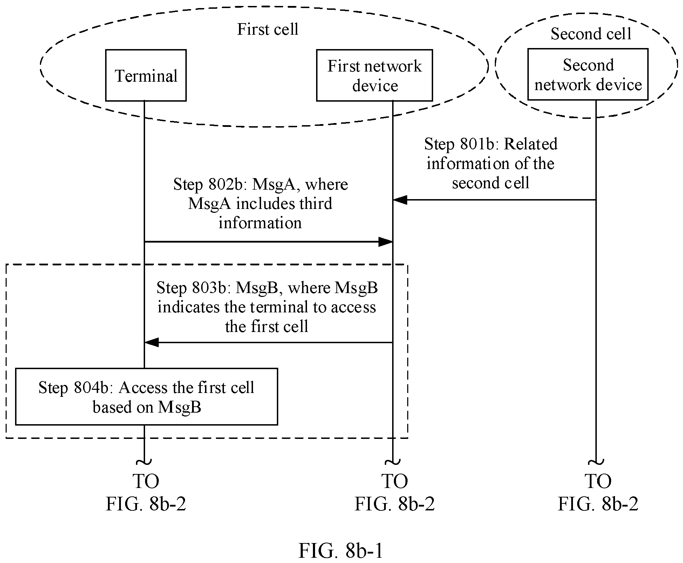

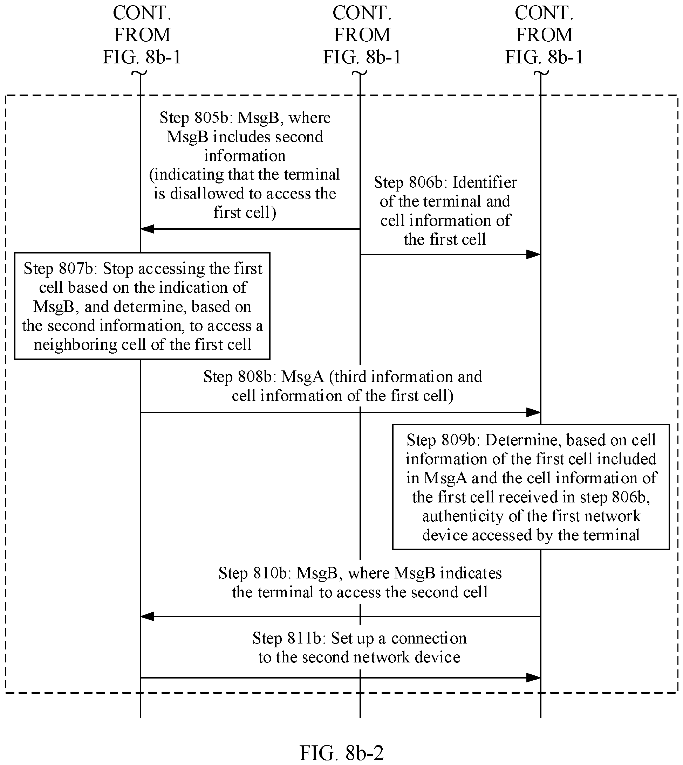

FIG. 8b-1 and FIG. 8b-2 are a flowchart of another access method according to an embodiment which does not form part of the invention as defined by the appended claims;

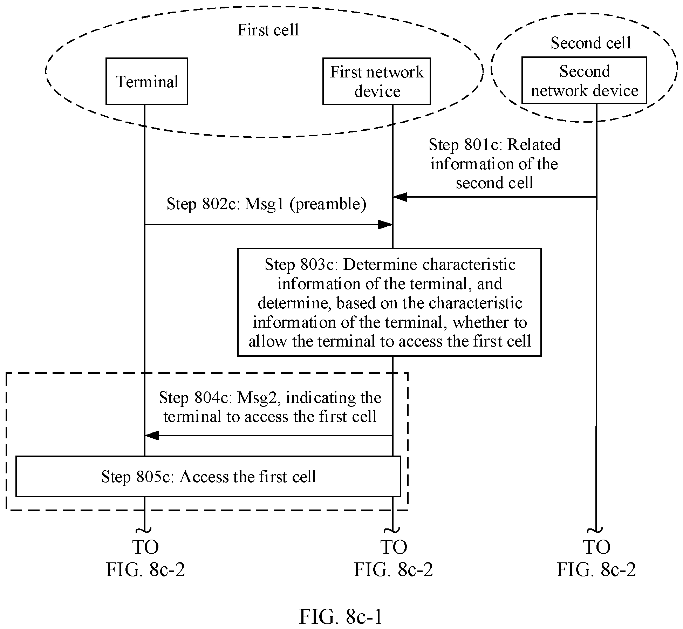

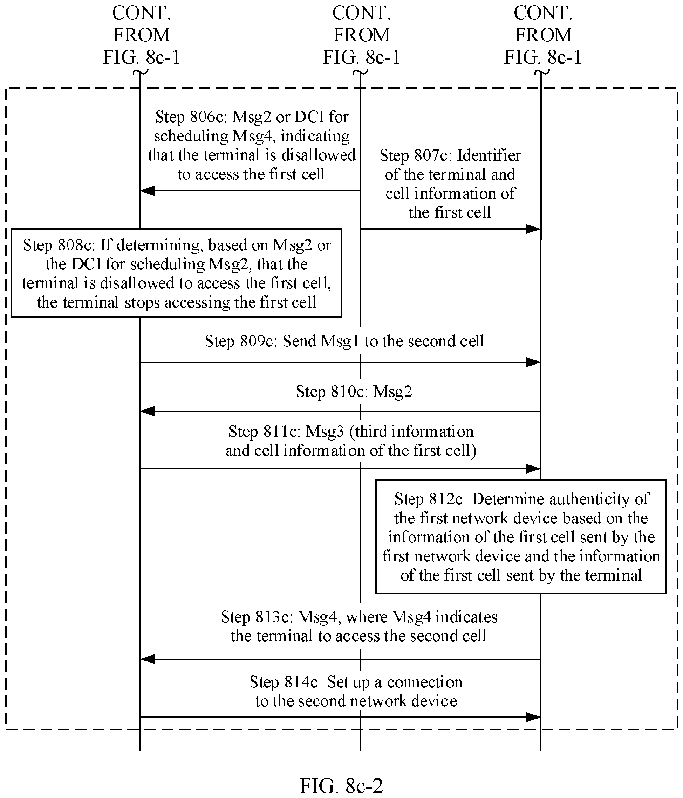

FIG. 8c-1 and FIG. 8c-2 are a flowchart of another access method according to an embodiment which does not form part of the invention as defined by the appended claims;

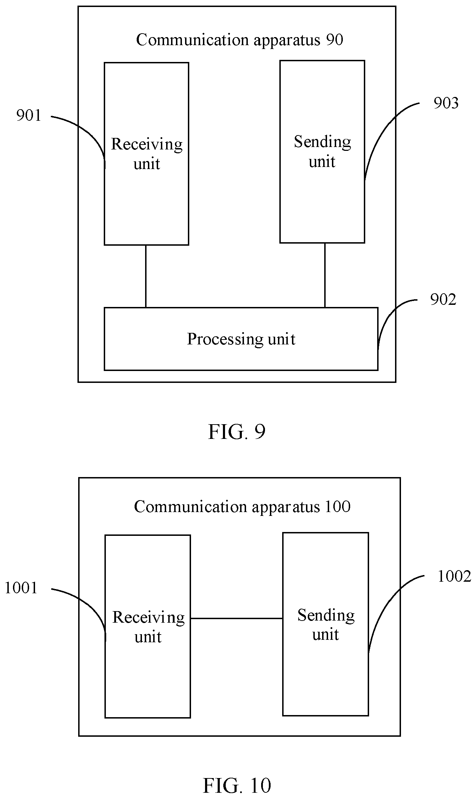

FIG. 9 is a schematic composition diagram of a communication apparatus 90 according to an embodiment of this application;
FIG. 10 is a schematic composition diagram of a communication apparatus 100 according to an embodiment of this application; and

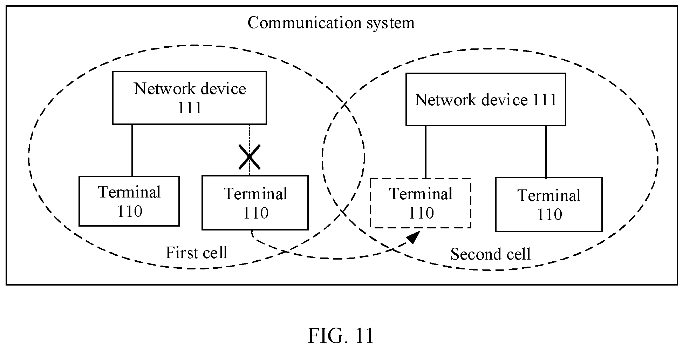

FIG. 11 is a schematic composition diagram of a communication system according to an embodiment of this application.

### DESCRIPTION OF EMBODIMENTS

Before embodiments of this application are described, some terms in embodiments of this application are explained.

Type: The type may be referred to as a terminal type (type or category). The type may be used to describe a type of terminals having a same or similar characteristic. Optionally, one type may include a plurality of "subtypes". One type or one subtype corresponds to one or more "characteristics" of a terminal, characteristics corresponding to a same type or a same subtype are the same or similar, and at least one characteristic corresponding to different types or different subtypes is different. The at least one type may be one, two, or more types. This is not limited in embodiments of this application. In actual application, a type of terminals may be described by using a type or a subtype, or a type of terminals may be described by using one or more characteristics. The type of terminals have a type or a subtype corresponding to the one or more characteristics.

For example, based on a capability and an application scenario of the terminal, the terminal is classified into one or more types/subtypes. For example, the terminal may be classified into the following several categories: an enhanced mobile broadband (enhanced mobile broadband, eMBB) terminal, a machine type communication (machine type communication, MTC) terminal, or a reduced capability (REDCAP) terminal. The REDCAP terminal may also be referred to as a light (light) terminal. The type may be uniquely identified by a type number. For example, two types may be respectively numbered 1 and 2. The subtype may also be uniquely identified by a subtype number. Numbers of different subtypes belonging to a same type are different, and numbers of subtypes belonging to different types may be different or the same. This is not limited. For example, two subtypes in type 1 may be respectively numbered subtype 1 and subtype 2, and two subtypes in type 2 may be respectively numbered subtype 3 and subtype 4. For another example, two subtypes in type 1 may be respectively numbered subtype 1 and subtype 2, and two subtypes in type 2 may be respectively numbered subtype 1 and subtype 2.

A type of terminals with a same characteristic may be uniquely identified by using a type number/subtype number of a terminal or characteristic information of the terminal. It should be noted that, for ease of description, the type of the terminal and the type number of the terminal may be used interchangeably, and the subtype of the terminal and the subtype number of the terminal may be used interchangeably. In other words, the type of the terminal described in the following embodiments may be the type number of the terminal, representing a type of terminals corresponding to the type number. The subtype of the terminal may refer to the subtype number of the terminal, representing a type of terminals corresponding to the subtype number.

Each type/subtype may correspond to one or more pieces of characteristic information. The characteristic information of the terminal may include but is not limited to a value of one or more of the following parameters of the terminal: a maximum bandwidth (maximum bandwidth, MAX BW), a minimum bandwidth, an application scenario, a peak rate, a maximum modulation order, a duplex capability, a branch quantity, a supported power level, processing time, whether supplementary uplink (supplementary uplink, SUL) is supported, whether carrier aggregation (carrier aggregation, CA) is supported, and a CA capability.

The maximum modulation order may be an order corresponding to maximum quadrature amplitude modulation (maximum quadrature amplitude modulation, MAX QAM). For example, the maximum modulation order may be 16 quadrature amplitude modulation (quadrature amplitude modulation, QAM), 64 QAM, or 256 QAM. The application scenario may include one or more of the following scenarios: an industrial wireless sensor network (industrial wireless sensor network, IWSN), a camera (camera) scenario, a wearable (wearable) scenario, a video surveillance scenario, and the like. Alternatively, the application scenario may not be limited. In this case, the characteristic information may be Not limited. The CA capability may be a maximum quantity of carriers supported by the terminal when the terminal supports CA. The duplex capability may refer to whether the terminal supports a capability of simultaneously receiving and sending signals during frequency division duplex (frequency division duplex, FDD), and mainly includes two capabilities: half-duplex frequency division duplex (half-duplex FDD) and full-duplex frequency division duplex (full-duplex FDD). Half-duplex FDD indicates that the terminal does not support simultaneously receiving and sending signals, that is, the terminal supports receiving and sending signals in a time-division manner. Full-duplex FDD indicates that the terminal supports simultaneously receiving and sending signals.

For example, Table 1 below shows a correspondence between a type, a subtype, and a characteristic. As shown in Table 1, characteristic information of a terminal of type 1 includes: MAX BW=5 megahertz (megahertz, MHz)/10 MHz, MAX QAM=16, applied to the IWSN scenario; characteristic information of a terminal of sub-type 3 includes: MAX BW=20 MHz, MAX QAM=16, and applied to the camera scenario.

**Table 1**

| Type | Subtype | Maximum bandwidth | Maximum modulation order | Application scenario |
|---|---|---|---|---|
| 1 | 1 | MAX BW=5 MHz | MAX QAM=16 | IWSN |
| | 2 | MAX BW=10 MHz | MAX QAM=16 | IWSN |
| 2 | 3 | MAX BW=20 MHz | MAX QAM=16 | camera |
| | 4 | MAX BW=20 MHz | MAX QAM=64 | wearable |

Table 1 is merely an example table. In addition to the content shown in Table 1, other types, subtypes, characteristics, other content, and the like may be further included. This is not limited in this application.

A cell (cell) may be an area that provides a wireless communication service for a terminal. A network device in the area provides a wireless communication service for the terminal. One network device may manage one or more cells. Each cell corresponds to a cell identifier (cell identifier, cell ID), and the cell identifier uniquely identifies the cell. If the terminal camps on a cell and is to access the camped cell, the cell may be referred to as a camped cell or a serving cell (serving cell) of the terminal, and a cell around the serving cell and a cell neighboring to the serving cell may be referred to as a neighborhood cell (neighborhood cell) or a neighboring cell of the serving cell.

That the terminal accesses a cell in embodiments of this application may be that the terminal accesses the network device in the cell or the terminal sets up a connection to the network device in the cell. After accessing the network device, the terminal may perform data transmission with the network device. The data transmission includes uplink data transmission and/or downlink data transmission.

In a possible implementation, in a communication system, a network side performs control traffic on a cell based on a load capability of the network side, a service requirement, and/or another reason. A main means for the network side to perform control traffic on a cell includes: The network side rejects some terminals to access the cell, and allows other terminals to access the cell, so as to reduce a quantity of terminals accessing a same cell, and reduce traffic transmission of the cell. For example, when a transmission resource or the like of a cell is limited, the network side rejects a terminal with a lower transmission priority in the cell to access the cell, and allows a terminal with a higher transmission priority in the cell to access the cell.

In a possible implementation, the following manner may be used to control some terminals in a cell to access the cell, and disallow some terminals to access the cell: When the terminal initiates random access, after the network device identifies a type, a subtype, or a characteristic of the terminal, the network device sends access rejection information or access allowing information to the terminal. The random access may include four-step random access or two-step random access, and is used by the terminal to access the network device.

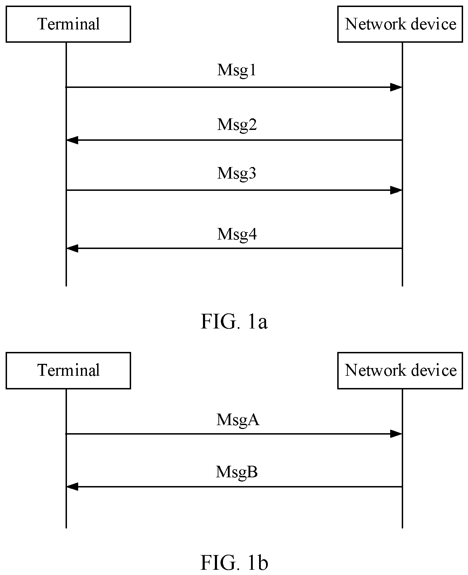

FIG. 1a is a schematic diagram of a four-step random access procedure. The procedure may include step (1): A terminal sends a first message (message 1, Msg1) to a network device, where the first message includes a random access preamble (random access preamble) sequence. The first message may notify the network device that there is a random access request. Step (2): After receiving Msg1, the network device sends a random access response to the terminal, where the random access response may also be referred to as a second message (message 2, Msg2). Step (3): After receiving the random access response, the terminal sends a third message (message 3, Msg3) to the network device. Step (4): The network device returns a contention resolution message, also referred to as a fourth message (message 4, Msg4), to the terminal that successfully accesses a cell, where the fourth message may carry an identifier of the terminal to specify the terminal that successfully accesses the cell, and another terminal that fails to access the cell re-initiates random access.

FIG. 1b is a schematic diagram of a two-step random access procedure. The procedure may include step (1): A terminal sends a message A (message A, MsgA) to a network device, where MsgA may include a random access preamble sequence and a physical uplink shared channel (physical uplink shared channel, PUSCH), and the PUSCH may carry an identifier of the terminal. Step (2): The network device receives MsgA, and returns a message B (message B, MsgB) to the terminal, where MsgB may carry an identifier of the terminal to specify a terminal that successfully accesses a cell, and another terminal that fails to access the cell re-initiates random access.

In a possible implementation, the network side provides an access rejection message, for example, includes the access rejection message in Msg3 or MsgB, when random access of the terminal is to be completed. Although this helps the network side flexibly perform service control and traffic control, for a rejected terminal, an initial access procedure and most processes of a random access procedure have been completely performed, and energy consumed in the initial access procedure and the random access procedure is wasted. This method is unfavorable to a terminal sensitive to energy consumption.

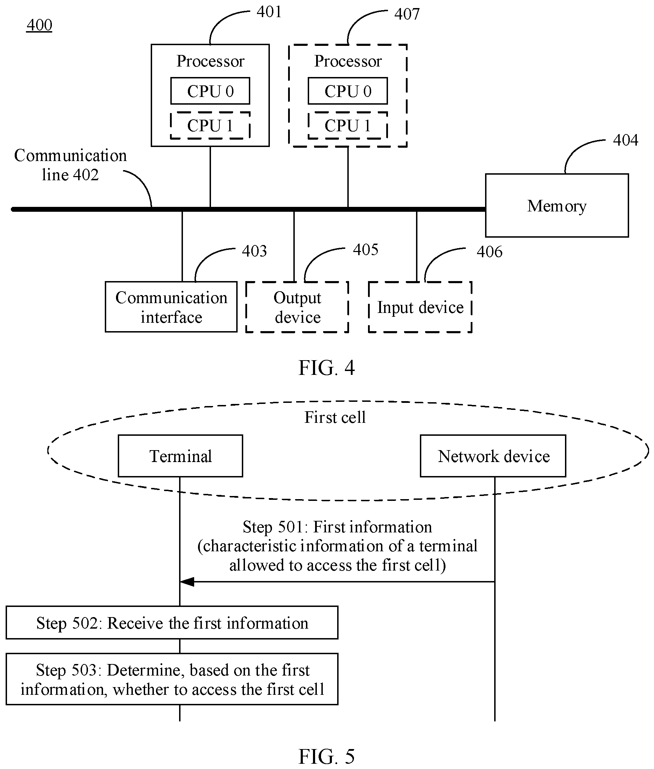

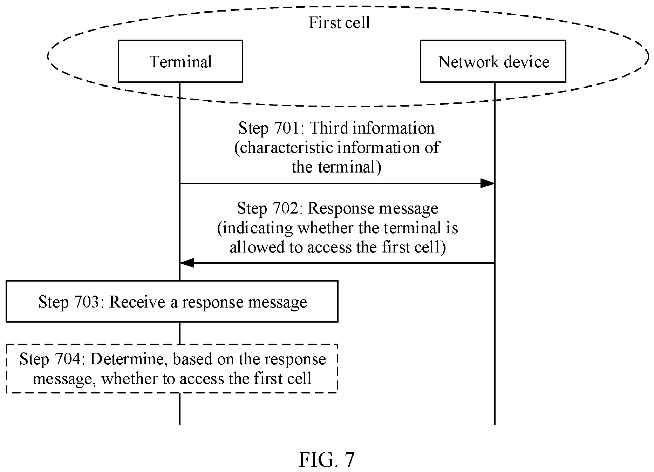

To resolve the foregoing technical problems, an embodiment of this application provides an access method, including: A network device indicates, to a terminal in a cell in an initial access procedure, characteristic information of a terminal allowed to access the cell, so that the terminal in the cell determines, with reference to a characteristic of the terminal, whether to access the cell. Specifically, for this manner, refer to the descriptions in the embodiments corresponding to the methods shown in FIG. 5 to FIG. 6c. Alternatively, the terminal reports characteristic information of the terminal to the network device in a random access procedure, so that the network device determines, based on the characteristic information of the terminal, whether to allow the terminal to access the cell. Specifically, for this manner, refer to the descriptions in the embodiments corresponding to the methods shown in FIG. 7 to FIG. 8b-1 and FIG. 8b-2.

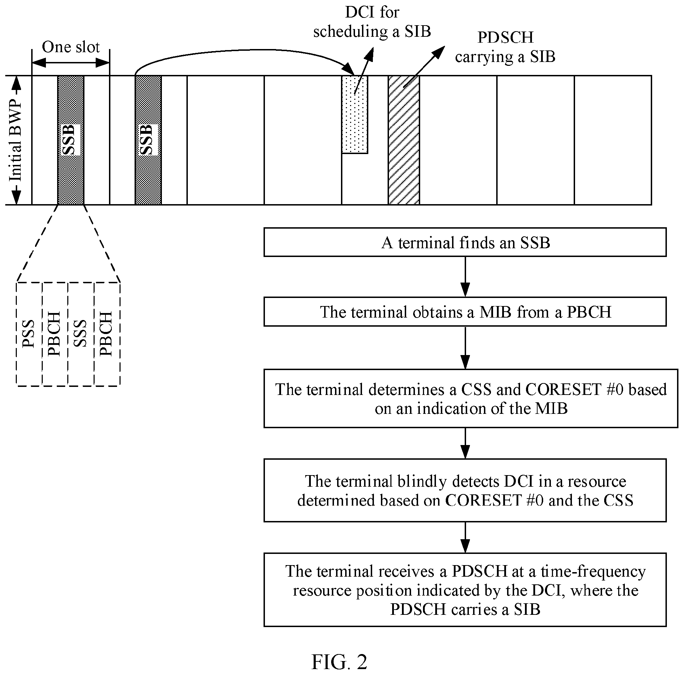

FIG. 2 is a schematic diagram of an initial access procedure. As shown in FIG. 2, the initial access procedure includes: Step 1: A network device broadcasts a synchronization signal block (synchronized signal block, SSB) in a cell, and a terminal finds the SSB broadcast by the network device, where the SSB includes a primary synchronization signal (primary synchronization signal, PSS), a secondary synchronization signal (secondary synchronization signal, SSS), and a physical broadcast channel (physical broadcast channel, PBCH). Step 2: The terminal obtains a MIB from the PBCH. Step 3: The terminal determines a common search space (common search space, CSS) and control resource set (control resource set, CORESET) #0 based on an indication of the MIB. Step 4:
The terminal blindly detects downlink control information (downlink control information, DCI) in a resource determined based on CORESET #0 and the CSS, where the DCI is used for scheduling a system information block (system information block, SIB), and the DCI may be scrambled by using a system information-radio network temporary identifier (system information-radio network temporary indicator, SI-RNTI). Step 5: The terminal receives a physical downlink shared channel (physical downlink shared channel, PDSCH) at a time-frequency resource position indicated by the DCI, where the PDSCH carries the SIB. In this embodiment of this application, in the procedure shown in FIG. 2, the DCI or the SIB may carry information that indicates characteristic information of a terminal allowed to access a cell.

The following describes the access method provided in embodiments of this application with reference to the accompanying drawings.

The access method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The access method provided in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communications (massive machine type communications, mMTC), device-to-device (device-to-device, D2D), vehicle to everything (vehicle to everything, V2X), vehicle to vehicle (vehicle to vehicle, V2V), and internet of things (internet of things, IoT).

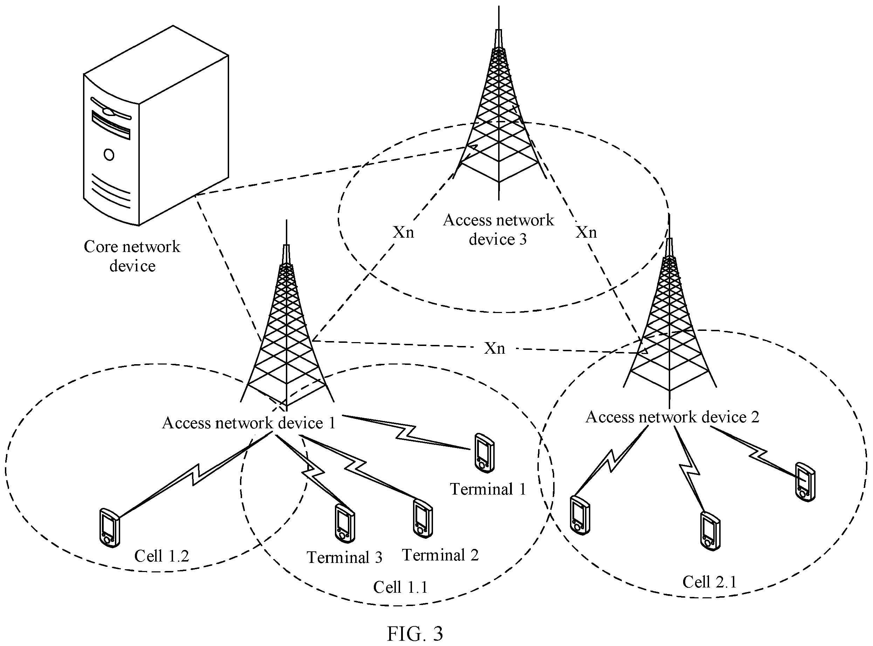

The following describes the access method provided in embodiments of this application by using a communication system shown in FIG. 3 as an example.

FIG. 3 is a schematic diagram of a communication system according to an embodiment of this application. As shown in FIG. 3, the communication system may include a network device and a plurality of terminals. The network device includes an access network device, may further include a core network device, and may further include a device (for example, a server) of a service provider. This is not limited. In this embodiment of this application, an example in which the network device is an access network device is used for description. The access network device may cover one or more cells. For example, access network device 1 covers cell 1.1 and cell 1.2, and access network device 2 covers cell 2.1. The terminal may access the access network device in one of the cells, and send uplink data to the access network device and/or receive downlink data sent by the access network device. Access network devices communicate with each other by using a wired network or a wireless network, for example, communicate with each other through an Xn interface in FIG. 3.

It should be noted that FIG. 3 is merely an example framework diagram, and a quantity of nodes and a quantity of cells included in FIG. 3 are not limited. In addition to the function nodes shown in FIG. 3, other nodes such as a core network device, a gateway device, and an application server may be further included. This is not limited. The access network device and the core network device communicate with each other by using a wired network or a wireless network, for example, communicate with each other through a next generation (next generation, NG) interface.

The network device is mainly configured to implement functions such as resource scheduling, radio resource management, and radio access control of the terminal. Specifically, the network device may be any node of a base station, a wireless access point, a transmission reception point (transmission reception point, TRP), a transmission point (transmission point, TP), and another access node. In embodiments of this application, an apparatus configured to implement a function of the network device may be a network device, or may be an apparatus that can support the network device in implementing the function, for example, a chip system. The apparatus may be installed in the network device or used together with the network device. In the technical solutions provided in embodiments of this application, the technical solutions provided in embodiments of this application are described by using an example in which an apparatus configured to implement the functions of the network device is a network device.

The terminal may be terminal equipment (terminal equipment), user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. In embodiments of this application, an apparatus configured to implement a function of the terminal may be a terminal, or may be an apparatus that can support the terminal in implementing the function, for example, a chip system. The apparatus may be installed in the terminal or used together with the terminal. The following describes the access methods provided in embodiments of this application by using an example in which an apparatus for implementing a function of the terminal is a terminal.

During specific implementation, the network elements shown in FIG. 3, for example, the terminal and the network device, may use a composition structure shown in FIG. 4 or include components shown in FIG. 4. FIG. 4 is a schematic structural diagram of a communication apparatus 400 according to an embodiment of this application. When the communication apparatus 400 has the functions of the terminal in embodiments of this application, the communication apparatus 400 may be a terminal, or a chip or a system-on-a-chip in the terminal. When the communication apparatus 400 has the functions of the network device in embodiments of this application, the communication apparatus 400 may be a network device, or a chip or a system-on-a-chip in the network device.

As shown in FIG. 4, the communication apparatus 400 may include a processor 401, a communication line 402, and a communication interface 403. Further, the communication apparatus 400 may include a memory 404. The processor 401, the memory 404, and the communication interface 403 may be connected to each other through the communication line 402.

The processor 401 may be a central processing unit (central processing unit, CPU), a general-purpose network processor (network processor, NP), a digital signal processor (digital signal processing, DSP), a microprocessor, a microcontroller, a programmable logic device (programmable logic device, PLD), or any combination thereof. The processor 401 may alternatively be any other apparatus having a processing function, for example, a circuit, a component, or a software module.

The communication line 402 is configured to transmit information between the components included in the communication apparatus 400.

The communication interface 403 is configured to communicate with another device or another communication network. The another communication network may be an Ethernet network, a radio access network (radio access network, RAN), a wireless local area network (wireless local area network, WLAN), or the like. The communication interface 403 may be an interface circuit, a pin, a radio frequency module, a transceiver, or any apparatus that can implement communication.

The memory 404 is configured to store instructions. The instructions may be a computer program.

The memory 404 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other optical disk storage, optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 404 may exist independently of the processor 401, or may be integrated into the processor 401. The memory 404 may be configured to store instructions, program code, some data, or the like. The memory 404 may be located inside the communication apparatus 400, or may be located outside the communication apparatus 400. This is not limited. The processor 401 is configured to execute the instructions stored in the memory 404, to implement the access methods provided in the following embodiments of this application.

In an example, the processor 401 may include one or more CPUs, for example, CPU 0 and CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a keyboard, a mouse, a microphone, a joystick, or another device, and the output device 405 is a display, a speaker (speaker), or another device.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

In this embodiment of this application, the chip system may include a chip, or may include a chip and another discrete component.

The following describes the access methods provided in embodiments of this application, with reference to the communication system shown in FIG. 3. Each device in the following embodiments may have the components shown in FIG. 4. Actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

FIG. 5 is a flowchart of an access method according to an embodiment of this application. As shown in FIG. 5, the method includes the following steps.

Step 501: A network device sends, in a first cell, first information to a terminal.

The network device may be any network device in FIG. 3, the first cell may be any cell covered by the network device, and the terminal may be at least one terminal in the first cell. The at least one terminal may be one or more (for example, two, three, four, or more) terminals. For the at least one terminal in the first cell, the first cell may also be referred to as a camped cell or a serving cell of the terminal. For example, the network device may be network device 1 in FIG. 3, the first cell may be cell 1.1, and the terminal may be a terminal in cell 1.1.

The first information may indicate characteristic information of terminals allowed to access the first cell. For a specific implementation of the first information, refer to the following manner (1) to manner (4).

In an example, the network device may send a SIB in the first cell, where the SIB carries the first information.

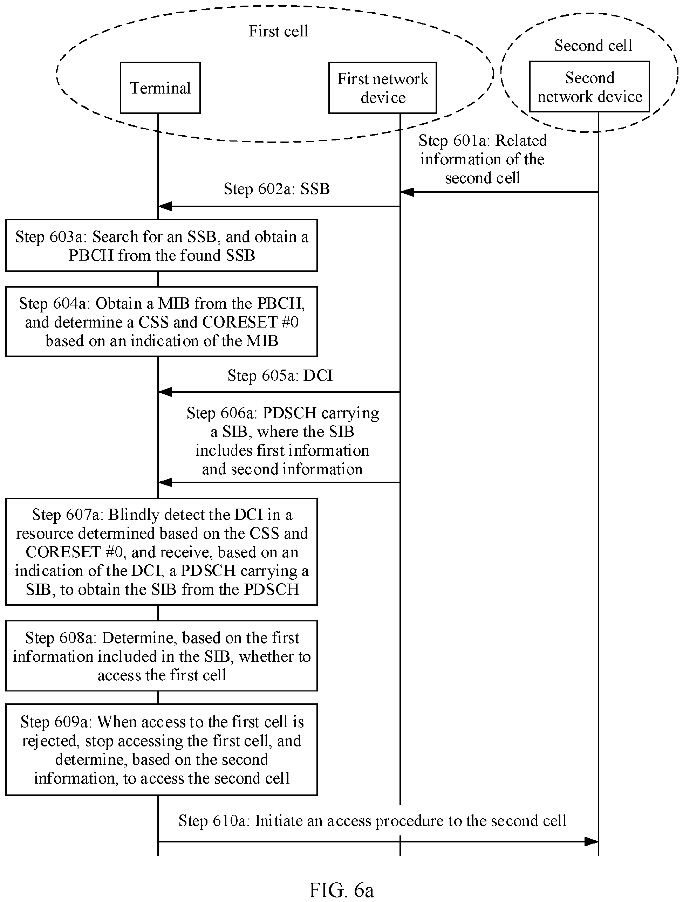

Specifically, for this manner, refer to the descriptions in the embodiment corresponding to the method shown in FIG. 6a.

In another example, the network device may send DCI in the first cell, where the DCI carries the first information.

The DCI may be used for scheduling a SIB; the DCI may be used for scheduling a PDSCH, where the PDSCH carries a SIB or the PDSCH includes a SIB; the DCI is scrambled by using an SI-RNTI.

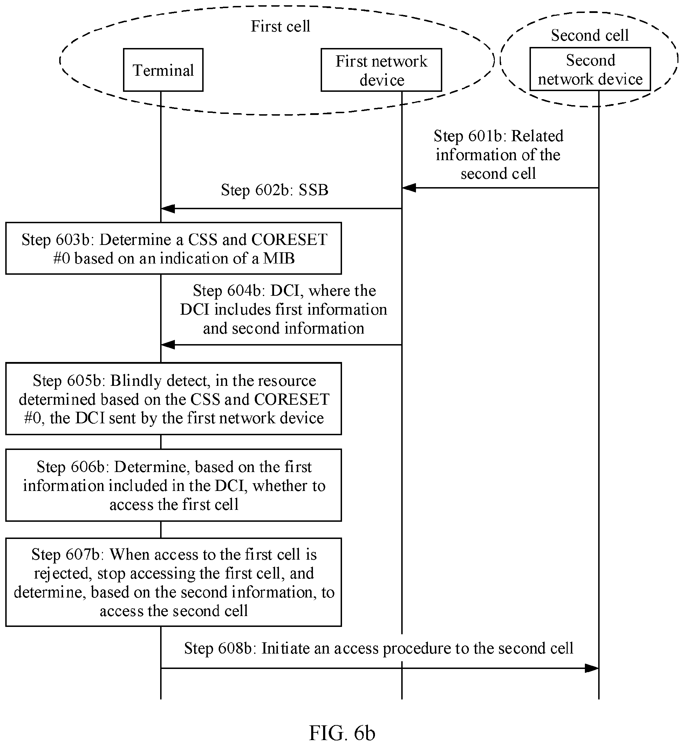

Specifically, for this manner, refer to the descriptions in the embodiment corresponding to the method shown in FIG. 6b.

In another example, the network device may send a paging message in the first cell, where the paging message carries the first information.

The network device may periodically send the paging message. The paging message may be used by a network side to page/search for a terminal, for example, page/search for a terminal in idle mode (RRC_IDLE mode) or inactive mode (RRC_INACTIVE mode) and wake up the terminal in idle mode or inactive mode, or page a terminal in connected mode and notify the terminal whether system information is updated.

A process in which the network device pages the terminal may include: The network device configures, for the terminal by using a system message and/or higher layer signaling, a search space and a CORESET that are used to monitor scheduling information of the paging message. The scheduling information of the paging message may be paging downlink control information (paging DCI). The paging DCI may be scrambled by using a paging-radio network temporary identifier (paging-radio network temporary identifier, P-RNTI). The paging DCI may be used for scheduling a PDSCH carrying the paging message. After receiving the search space and the CORESET that are configured by the network device, the terminal blindly detects, in a resource determined based on the search space and the CORESET, the paging DCI scrambled by using the P-RNTI. If the detection succeeds, the terminal searches a PDSCH scheduled by using the paging DCI for a user identifier of the terminal. If the user identifier of the terminal exists, the terminal determines that the terminal is paged.

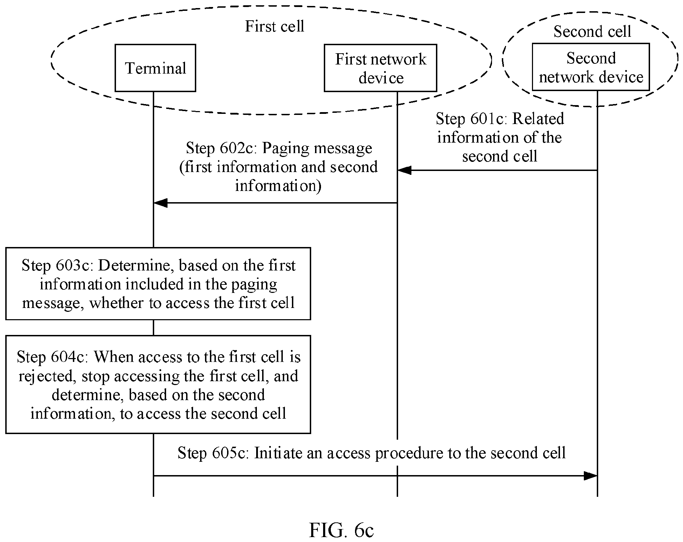

Specifically, for this manner, refer to the descriptions in the embodiment corresponding to the method shown in FIG. 6c.

Step 502: The terminal receives the first information in the first cell.

For example, when the first information is included in the SIB, the terminal may receive, based on the DCI for scheduling a SIB, the SIB at a time-frequency resource position indicated by the DCI, to obtain the first information from the SIB. The SIB is a common message in the cell. For example, the SIB may be received by all terminals in the cell, or may be received by a group of terminals in the cell.

When the first information is included in the DCI for scheduling a SIB, the terminal may obtain the DCI through blind detection in the resource determined based on the CSS and CORESET #0, to obtain the first information from the DCI. The resource determined based on the CSS and CORESET #0 may include one or more PDCCH candidate resources. The network device may select one PDCCH candidate resource from the one or more PDCCH candidate resources, and send a PDCCH by using the selected PDCCH candidate resource, where the PDCCH carries the DCI for scheduling a SIB. Because the terminal does not know on which of the one or more PDCCH candidate resources the network device sends the PDCCH for scheduling a SIB, the terminal sequentially blindly detects, in the one or more PDCCH candidate resources, the PDCCH for scheduling a SIB. The PDCCH for scheduling a SIB may be a common PDCCH, for example, may be received by all terminals in the cell, or may be received by a group of terminals in the cell.

When the first information is included in the paging message, the terminal may periodically monitor the paging message, to obtain the first information from the paging message.

Step 503: The terminal determines, based on the first information, whether to access the first cell.

For example, for a terminal, when the terminal has the characteristic information of terminals allowed to access the first cell, the terminal accesses the first cell. For example, the terminal completes a random access procedure, and sets up a radio resource control (radio resource control, RRC) connection to the network device. When the terminal does not have the characteristic information of terminals allowed to access the first cell, the terminal determines that the terminal is disallowed to access the first cell, and stops accessing the first cell. For example, the terminal does not initiate or stops initiating a random access procedure to the network device corresponding to the first cell, searches for a neighboring cell of the first cell, and accesses the neighboring cell of the first cell.

When the terminal does not have the characteristic information of terminals allowed to access the first cell, the terminal may alternatively determine, based on a default setting, whether to access the first cell. The default setting may be that access to the first cell is allowed, or access to the first cell is disallowed. This is not limited.

Based on the method shown in FIG. 5, the network device indicates, to a terminal in a cell, the characteristic information of terminals allowed to access the cell, and the terminal determines, based on the indication of the network device and characteristic information of terminals, whether the terminal can access the cell. In this way, the network device indicates characteristics of terminals allowed/disallowed to access a cell, so that flexibility of controlling cell access by a network side is improved, and the network side can better perform service control and traffic control.

In the method shown in FIG. 5, implementations of the first information may be those described in the following manner (1) to manner (4).

Manner (1): The first information includes the characteristic information of terminals allowed to access the first cell, and/or the first information includes characteristic information of terminals disallowed to access the first cell. For example, the first information clearly indicates characteristic information that terminals allowed to access the first cell has, and characteristic information that terminals disallowed to access the first cell has.

The characteristic information of terminals allowed to access the first cell and the characteristic information of terminals disallowed to access the first cell may include one or more groups of characteristic information. One group of characteristic information may correspond to one type or one subtype, and one group of characteristic information may include a value corresponding to one or more parameters of terminals.

Specifically, when the first information includes the characteristic information of terminals allowed to access the first cell, the first information may further include an access allowing indication, or may not include the access allowing indication. In this case, the characteristic information carried in the first information is preconfigured as the characteristic information of terminals allowed to access the first cell. After receiving the first information, the terminal may determine whether the first information includes a group of characteristic information that is the same as characteristic information of terminals. If the first information includes a group of characteristic information that is the same as the characteristic information of terminals, the terminal determines to access the first cell; or if the first information does not include a group of characteristic information that is the same as the characteristic information of terminals, the terminal determines that the terminal is disallowed to access the first cell.

In embodiments of this application, that the characteristic information of terminals is the same as a group of characteristic information may mean that the characteristic information of terminals is completely the same as characteristic information included in the group of characteristic information.

When the first information includes the characteristic information of terminals disallowed to access the first cell, the first information may include an access disallowing indication, or may not include the access disallowing indication. In this case, the characteristic information carried in the first information may be preconfigured as the characteristic information of terminals disallowed to access the first cell. After receiving the first information, the terminal may determine whether the first information includes a group of characteristic information that is the same as characteristic information of terminals. If the first information includes a group of characteristic information that is the same as the characteristic information of terminals, the terminal determines that the terminal is disallowed to access the first cell; or if the first information does not include a group of characteristic information that is the same as the characteristic information of terminals, the terminal determines that the terminal is allowed to access the first cell.

When the first information includes the characteristic information of terminals allowed to access the first cell and the characteristic information of terminals disallowed to access the first cell, the first information further includes an access allowing indication corresponding to the characteristic information of terminals allowed to access the first cell, and includes an access disallowing indication corresponding to the characteristic information of terminals disallowed to access the first cell. For example, after receiving the first information, the terminal may match the characteristic information of terminals with a plurality of groups of characteristic information included in the first information. If the first information includes a group of characteristic information, the group of characteristic information is the same as the characteristic information of terminals, and the group of characteristic information corresponds to the access allowing indication, the terminal determines that the terminal is allowed to access the first cell. Alternatively, if the first information includes a group of characteristic information, the group of characteristic information is the same as the characteristic information of terminals, and the group of characteristic information corresponds to the access disallowing indication, the terminal determines that the terminal is disallowed to access the first cell.

In this embodiment of this application, the access allowing indication may indicate that access to the first cell is allowed, and the access disallowing indication may indicate that access to the first cell is disallowed.

For example, the characteristic information of terminals allowed to access the first cell and/or the characteristic information of terminals disallowed to access the first cell may be carried in the first information in an array form, may be carried in the first information in a table form, or may be carried in the first information in another form. This is not limited.

For example, the network device allows a type of terminals having characteristic information: {MAX BW=10 MHz, MAX QAM=16, an application scenario being Not limited} to access the first cell, allows a type of terminals having characteristic information: {MAX BW=20 MHz, MAX QAM=16, an application scenario being camera} to access the first cell, allows a type of terminals having characteristic information: {MAX BW=20 MHz, MAX QAM=64, an application scenario being wearable} to access the first cell, and disallows a type of terminals having characteristic information: {MAX BW=5 MHz, MAX QAM=16, an application scenario being IWSN} to access the first cell.

When the characteristic information is carried in the first information in the array form, the first information may include: {MAX BW=5 MHz, MAX QAM=16, IWSN, access disallowing indication}, {MAX BW=10 MHz, MAX QAM=16, Not limited, access allowing indication}, {MAX BW=20 MHz, MAX QAM=16, camera, access allowing indication}, and {MAX BW=20 MHz, MAX QAM=64, wearable, access allowing indication}.

When the characteristic information is carried in the first information in the table form, the first information may include a table as shown in Table 2 below. The table may include a plurality of rows, and each row corresponds to a group of characteristic information and an access allowing indication or an access disallowing indication corresponding to the group of characteristic information. After receiving the first information, the terminal may match the characteristic information of terminals with characteristic information included in Table 2, and determine a specific row in Table 2 in which characteristic information is the same as the characteristic information of terminals. When the terminal has all characteristic information in a row, the terminal may determine, based on the access allowing indication or the access disallowing indication in the last column of this row, whether the terminal is allowed to access the first cell.

**Table 2**

| Maximum bandwidth | Maximum modulation order | Application scenario | Whether access to the first cell is allowed |
|---|---|---|---|
| MAX BW=5 MHz | MAX QAM=16 | IWSN | Disallowed |
| MAX BW=10 MHz | MAX QAM=16 | Not limited | Allowed |
| MAX BW=20 MHz | MAX QAM=16 | camera | Allowed |
| MAX BW=20 MHz | MAX QAM=64 | wearable | Allowed |

It should be noted that Table 2 is an example table, and a quantity of pieces of characteristic information in Table 2 is not limited. In addition to the content shown in Table 2, a value corresponding to one or more other parameters may be further included. This is not limited.

Manner (2): The first information includes a type of terminals allowed to access the first cell, and/or the first information includes a type of terminals disallowed to access the first cell.

In manner (2), there is a correspondence between a type and characteristic information that terminals of this type have. The correspondence may be pre-specified in a protocol, or may be determined by the network device and indicated to the terminal by using signaling. The terminal may determine a type of terminals based on the correspondence and the characteristic information of terminals. Alternatively, the type of terminals is preconfigured on the terminal. The following describes an example in which the terminal determines the type of terminals based on the correspondence and the characteristic information of terminals.

Similar to manner (1), when the first information includes the type of terminals allowed to access the first cell, the first information may further include the access allowing indication, or may not include the access allowing indication. In this case, the type carried in the first information is preconfigured as the type of terminals allowed to access the first cell. After receiving the first information, the terminal may determine, based on the characteristic information of terminals and the correspondence between a type and characteristic information, the type of terminals. If the type of terminals is included in the first information, the terminal determines to access the first cell; or if the type of terminals is not included in the first information, the terminal determines that the terminal is disallowed to access the first cell.

When the first information includes the type of terminals disallowed to access the first cell, the first information may include the access disallowing indication, or may not include the access disallowing indication. The type carried in the first information may be preconfigured as the type of terminals disallowed to access the first cell. After receiving the first information, the terminal may determine, based on the characteristic information of terminals and the correspondence between a type and characteristic information, the type of terminals. If the type of terminals is included in the first information, the terminal determines that the terminal is disallowed to access the first cell; or if the type of terminals is not included in the first information, the terminal determines that the terminal is allowed to access the first cell.

When the first information includes the type of terminals allowed to access the first cell and the type of terminals disallowed to access the first cell, the first information further includes an access allowing indication corresponding to the type of terminals allowed to access the first cell, and includes an access disallowing indication corresponding to the type of terminals disallowed to access the first cell. After receiving the first information, the terminal may match the type of terminals with a type included in the first information. If the first information includes a type, the type is the same as the type of terminals, and the type corresponds to the access allowing indication, the terminal determines that the terminal is allowed to access the first cell. If the first information includes a type, the type is the same as the type of terminals, and the type corresponds to the access disallowing indication, the terminal determines that the terminal is disallowed to access the first cell.

For related descriptions of the access allowing indication and the access disallowing indication in manner (2), refer to the descriptions in manner (1). Details are not described again.

For example, the type of terminals allowed to access the first cell and/or the type of terminals disallowed to access the first cell may be carried in the first information in an array form, may be carried in the first information in a table form, or may be carried in the first information in another form. This is not limited.

For example, the network device allows terminals of type 1 to access the first cell, and disallows terminals of type 2 to access the first cell. When the type is carried in the first information in the array form, the first information may include {type 1, access allowing indication} and {type 2, access disallowing indication}.

When the type is carried in the first information in the table form, the first information may include a table as shown in Table 3 below. As shown in Table 3, the table may include one or more rows, and each row corresponds to a type and an access allowing indication or an access disallowing indication corresponding to the type. After receiving the first information, the terminal may match the type of terminals with a type in Table 2, and determine a specific row in Table 2 in which a type is the same as the type of terminals. When the type of terminals matches a type in a row, the terminal may determine, based on the access allowing indication or the access disallowing indication in the last column of this row, whether the terminal is allowed to access the first cell.

**Table 3**

| Type of terminals | Whether access to the first cell is allowed |
|---|---|
| 1 | Allowed |
| 2 | Disallowed |

It should be noted that Table 3 is an example table, and a quantity of types in Table 3 is not limited. In addition to the content shown in Table 3, one or more other types may be further included. This is not limited.

Alternatively, if the type includes one or more subtypes, manner (2) may be replaced with the following: The first information includes a type and/or a subtype of terminals allowed to access the first cell, and/or the first information includes a type and/or a subtype of terminals disallowed to access the first cell. Specifically, for the alternative manner, refer to the foregoing manner in which the first information carries the type. Details are not described again.

For example, as shown in Table 4 below, terminals of type 1 and subtype 1 is allowed to access the first cell, terminals of type 1 and subtype 2 is disallowed to access the first cell, terminals of type 2 and subtype 3 is allowed to access the first cell, and terminals of type 2 and subtype 4 is disallowed to access the first cell. When the terminal has type 1 and subtype 1, the terminal may determine, by querying Table 4, that the terminal is allowed to access the first cell.

**Table 4**

| Type | Subtype | Whether access to the first cell is allowed |
|---|---|---|
| 1 | 1 | Allowed |
| | 2 | Disallowed |
| 2 | 3 | Allowed |
| | 4 | Disallowed |

It should be noted that Table 4 is an example table, and a quantity of types in Table 4 is not limited. In addition to the content shown in Table 4, one or more other types and subtypes may be further included. This is not limited.

In addition, when the characteristic information of terminals does not correspond to the type/subtype of terminals, for example, the characteristic information of terminals includes a value of a plurality of parameters, the type/subtype of terminals corresponds to a value of at least one (some) of the plurality of parameters, and a value of other parameters in the plurality of parameters do not correspond to the type/subtype of terminals, if the foregoing manner (2) is used, information about whether the terminal that has a characteristic not included in the type/subtype is allowed to access the first cell cannot be indicated to the terminal. In this case, the type of terminals allowed to access the first cell and the characteristic information of terminals allowed to access the first cell may be indicated to the terminal, to represent that the network device allows a terminal of a specific type and a terminal with a specific characteristic to access the first cell. For example, the foregoing manner (1) and manner (2) may be used in combination. To be specific, the first information may include the characteristic information of terminals allowed to access the first cell and/or the characteristic information of terminals disallowed to access the first cell, and may further include the type of terminals allowed to access the first cell and/or the type of terminals disallowed to access the first cell. In this case, after receiving the first information, the terminal may determine that the terminal is allowed to access the first cell, when characteristic information of terminals is the same as the characteristic information that is indicated by the network device and that is of terminals allowed to access the first cell, and the type of terminals is the same as the type that is indicated by the network device and that is of terminals allowed to access the first cell. Otherwise, the terminal determines that the terminal is disallowed to access the first cell.

For example, both Table 2 and Table 3 above are carried in the first information and sent to the terminal. Assuming that a terminal has type 1, and characteristic information of the terminal includes: MAX BW=5 MHz, MAX QAM=16, applied to an IWSN scenario, the terminal may learn, by querying Table 2 and Table 3, that the terminal is disallowed to access the first cell. Assuming that a terminal has type 1, and characteristic information of the terminal includes: MAX BW=20 MHz, MAX QAM=64, applied to a wearable scenario, the terminal may learn, by querying Table 2 and Table 3, that the terminal is allowed to access the first cell.

Manner (3): The first information includes K bits, and one of the K bits corresponds to one or more of M types. Each of the K bits corresponds to one or more of the M types, and different bits may correspond to a same quantity of types or different quantities of types. For example, one type may correspond to one bit, or may correspond to a plurality of bits. This is not limited in this embodiment of this application. When a value of a bit is T1, terminals allowed to access the first cell has a type corresponding to the bit; or when a value of the bit is T2 or is not T1, terminals disallowed to access the first cell has a type corresponding to the bit. K is an integer greater than or equal to 1, M is an integer greater than or equal to 1, T1 and T2 are integers, and T1 and T2 are different.

Each type corresponds to one or more pieces of characteristic information. Terminals of a same type have same characteristic information, and terminals of different types have different characteristic information.

T1 and T2 may be binary bit numbers "0" and " 1" or binary bit numbers "1" and "0", or may be another symbol or number, or the like. This is not limited. For example, T1 is 1, and T2 is 0; or T1 is 0, and T2 is 1.

For example, the first information is carried in DCI, one bit corresponds to one type, and a value of the bit is a binary bit number. The binary bit number, namely, 0, indicates that a terminal of a type corresponding to the bit is allowed to access the first cell, and the binary bit number, namely, 1, indicates that a terminal of a type corresponding to the bit is disallowed to access the first cell. When there are four types: type 1, type 2, type 3, and type 4, a terminal of type 4 is disallowed to access the first cell, and terminals of the other types are allowed to access the first cell, the DCI may carry four bits 0001 that are in a one-to-one correspondence with the four types. 0001 indicates that terminals of type 1 to type 3 are allowed to access the first cell, and terminals of type 4 are disallowed to access the first cell.

Manner (4): The first information indicates N, and a type of terminals allowed to access the first cell includes N of M types, or a type of terminals disallowed to access the first cell includes N of M types. M is an integer greater than or equal to 1, and N is an integer greater than or equal to 1.

For example, the M types may be sorted, and a sequence number is allocated to each type. The type of terminals allowed to access the first cell is a type whose sequence number is less than or equal to N in the M types, and the type of terminals disallowed to access the first cell is a type whose sequence number is greater than N in the M types. Alternatively, the type of terminals allowed to access the first cell is a type whose sequence number is greater than N in the M types, and the type of terminals disallowed to access the first cell is a type whose sequence number is less than or equal to N in the M types.

A value of N may be represented by using a binary bit number or a hexadecimal number. The binary bit number is used as an example. If N is 2, 01 may be used for representation. If N is 3, 10 may be used for representation.

For example, the first information is carried in DCI, the type of terminals allowed to access the first cell is a type whose sequence number is less than or equal to N in the M types, and the type of terminals disallowed to access the first cell is a type whose sequence number is greater than N in the M types. For example, the value of N is represented by using a binary bit number. Assuming that there are four types: type 1, type 2, type 3, and type 4, a terminal of type 4 is disallowed to access the first cell, and terminals of the other three types are allowed to access the first cell, the four types may be sorted in a sequence of type 1, type 2, type 3, and type 4, and sequence numbers corresponding to the four types are 1, 2, 3, and 4. In this case, the DCI may carry a binary bit "10", to indicate that the type of terminals allowed to access the first cell is a type whose sequence number is less than or equal to 3, and the type of terminals disallowed to access the first cell is a type whose sequence number is greater than 3.

Further, in a possible implementation shown in FIG. 5, to reduce power consumption caused by searching for an accessible neighboring cell by the terminal when the terminal is rejected to access the first cell, the method shown in FIG. 5 may further include the following steps: The network device sends, in the first cell, second information to the terminal, and the terminal receives the second information from the network device.

The second information may be used to indicate characteristic information of terminals allowed to access a second cell, the second cell is a neighboring cell of the first cell, and the neighboring cell of the first cell may be one or more cells. In this way, when the terminal is rejected to access the first cell, the terminal may determine, based on the second information, the second cell that can be accessed by the terminal, and access the second cell.

The neighboring cell of the first cell may refer to a cell that is around the first cell, neighboring to the first cell, or close to the first cell (for example, within a value range of 500 meters, 1 kilometre (kilometre, km), 3 km, or another value). The first cell and the neighboring cell of the first cell may be covered by a same network device, or may be covered by different network devices. This is not limited. For example, as shown in FIG. 3, assuming that the first cell is cell 1.1 covered by network device 1, the neighboring cell of the first cell may include cell 1.2 covered by network device 1 and cell 2.1 covered by network device 2.

It should be noted that in embodiments of this application, a network device covering the first cell may be referred to as a first network device, and a network device covering the second cell may be referred to as a second network device. The first network device and the second network device may be a same network device, or may be different network devices. This is not limited.

The second information may be carried together with the first information and sent to the terminal. For example, the second information may be carried together with the first information in a SIB, a paging message, or DCI for scheduling a SIB, and sent to the terminal. Alternatively, the second information may be carried in a separate message (a message different from a message carrying the first information) and sent to the terminal. This is not limited.

For example, the second information may include the characteristic information of terminals allowed to access the second cell and/or characteristic information of terminals disallowed to access the second cell; include a type of terminals allowed to access the second cell and/or a type of terminals disallowed to access the second cell; include a subtype of terminals allowed to access the second cell and/or a subtype of terminals disallowed to access the second cell; include the K bits corresponding to the M types; or include the value of N value. Specifically, for an implementation thereof, refer to the implementations of the first information in the foregoing manner (1) to manner (4). Details are not described again.

In addition, the second information further includes identifiers (identifiers, ID) of second cells, access frequency information of the second cells, access priorities of the second cells, and the like. In this case, after finding, based on the second information, second cells allowed to be accessed, the terminal accesses a second cell with a higher access priority based on access frequency information of the second cell. The access frequency information of the second cell may include a frequency (frequency) of an SSB of the second cell or a global synchronization channel number (global synchronization channel number, GSCN) of the SSB of the second cell.

Content of the second information may be actively sent by the second network device to the first network device through an Xn interface, or may be requested by the first network device from the second network device through the Xn interface. This is not limited. The first network device may directly forward the content to the terminal, or may forward the content to the terminal after simple processing (for example, adding a header or reassembling the content). This is not limited.

For example, Table 5 below shows the second information configured by the network device for the terminal. The second information includes a subtype of terminals allowed to access the neighboring cell of the first cell, a cell identifier of the neighboring cell of the first cell, and an SSB frequency and an access priority of the neighboring cell of the first cell. As shown in Table 5, neighboring cells include cell 1, cell 2, and cell 3, IDs of the three cells are cell ID-1, cell ID-2, and cell ID-3 respectively, an access priority of cell 1 is higher than that of cell 2, and an access priority of cell 2 is higher than that of cell 3. An SSB frequency of cell 1 is 1920 MHz, subtypes of terminals allowed to access cell 1 include subtype 1, subtype 2, subtype 3, and subtype 4. An SSB frequency of cell 2 is 2010 MHz, subtypes of terminals allowed to access cell 2 include subtype 1 and subtype 2. An SSB frequency of cell 3 is 1432 MHz, and subtypes of terminals allowed to access cell 3 are subtype 3 and subtype 4. If a terminal is rejected to access the first cell, and the terminal has subtype 4, the terminal determines, by querying Table 5, that the terminal can access cell 1 and cell 3; selects cell 1 with a higher access priority; receives, on the SSB frequency of cell 1, namely, 1920 MHz, an SSB sent by the network device; and accesses cell 1 based on the received SSB. If the terminal fails to access cell 1, the terminal selects cell 3 with a lower access priority, and accesses cell 3 based on the SSB frequency of cell 3, namely, 1432 MHz.

**Table 5**

| Neighboring cell ID | SSB frequency | Subtype of terminals allowed to access the neighboring cell | Access priority |
|---|---|---|---|
| Cell ID-1 | 1920 MHz | 1, 2, 3, 4 | 1 |
| Cell ID-2 | 2010 MHz | 1, 2 | 2 |
| Cell ID-3 | 1432 MHz | 3 and 4 | 3 |

It should be noted that Table 5 is an example table, and a quantity of subtypes in Table 5 is not limited. In addition to the content shown in Table 5, one or more other types, subtypes, pieces of characteristic information, and the like may be further included. This is not limited.

For another example, Table 6 below shows the second information configured by the network device for the terminal. The second information includes a maximum bandwidth of terminals allowed to access the neighboring cell of the first cell, a cell identifier of the neighboring cell of the first cell, and an SSB frequency and an access priority of the neighboring cell of the first cell. As shown in Table 6, neighboring cells include cell 1, cell 2, and cell 3, IDs of the three cells are cell ID-1, cell ID-2, and cell ID-3 respectively, an access priority of cell 1 is higher than that of cell 2, and an access priority of cell 2 is higher than that of cell 3. An SSB frequency of cell 1 is 1920 MHz, and a maximum bandwidth of terminals allowed to access cell 1 is MAX BW=5 MHz. An SSB frequency of cell 2 is 2010 MHz, and a maximum bandwidth of terminals allowed to access cell 2 is MAX BW=10 MHz. An SSB frequency of cell 3 is 1432 MHz, and maximum bandwidths of terminals allowed to access cell 3 are: MAX BW=10 MHz and MAX BW=20 MHz. If a terminal is rejected to access the first cell, and the terminal has a maximum bandwidth MAX BW=10 MHz, the terminal determines, by querying Table 6, that the terminal can access cell 2 and cell 3; selects cell 2 with a higher access priority; receives, on the SSB frequency of cell 2, namely, 2010 MHz, an SSB sent by the network device; and accesses cell 2 based on the received SSB. If the terminal fails to access cell 2, the terminal selects cell 3 with a lower access priority, and accesses cell 3 based on the SSB frequency of cell 3, namely, 1432 MHz.

**Table 6**

| Neighboring cell ID | SSB frequency | Maximum bandwidth of terminals allowed to access the neighboring cell | Access priority |
|---|---|---|---|
| Cell ID-1 | 1920 MHz | MAX BW=5 MHz | 1 |
| Cell ID-2 | 2010 MHz | MAX BW=10 MHz | 2 |
| Cell ID-3 | 1432 MHz | MAX BW=10 MHz | 3 |
| | | MAX BW=20 MHz | |

It should be noted that Table 6 is an example table, and a quantity of pieces of characteristic information in Table 6 is not limited. In addition to the content shown in Table 6, one or more other types, subtypes, pieces of characteristic information, and the like may be further included. This is not limited.

For another example, Table 7 below shows the second information configured by the network device for the terminal. The second information includes characteristic information of terminals allowed to access the neighboring cell of the first cell, a cell identifier of the neighboring cell of the first cell, and an SSB frequency and an access priority of the neighboring cell of the first cell. As shown in Table 7, neighboring cells include cell 1, cell 2, and cell 3, IDs of the three cells are cell ID-1, cell ID-2, and cell ID-3 respectively, an access priority of cell 1 is higher than that of cell 2, and an access priority of cell 2 is higher than that of cell 3. An SSB frequency of cell 1 is 1920 MHz, and characteristic information of terminals allowed to access cell 1 is "not support wearable". An SSB frequency of cell 2 is 2010 MHz, and characteristic information of terminals allowed to access cell 2 is "only support half-duplex FDD". An SSB frequency of cell 3 is 1432 MHz, and characteristic information of terminals allowed to access cell 3 is "not restricted". If the terminal is rejected to access the first cell, and the terminal supports half-duplex FDD, the terminal may determine, by querying Table 7, that the terminal can access cell 2 and cell 3; select cell 2 with a higher access priority; receive, on the SSB frequency of cell 2, namely, 2010 MHz, an SSB sent by the network device; and access cell 2 based on the received SSB. If the terminal fails to access cell 2, the terminal selects cell 3 with a lower access priority and accesses cell 3 based on the SSB frequency of cell 3, namely, 1432 MHz.

**Table 7**

| Neighboring cell ID | SSB frequency | Access priority | Characteristic information |
|---|---|---|---|
| Cell ID-1 | 1920 MHz | 1 | Not support wearable |
| Cell ID-2 | 2010 MHz | 2 | Only support half- duplex FDD |
| Cell ID-3 | 1432 MHz | 3 | Not limited (not limited) |

It should be noted that Table 7 is an example table, and a quantity of pieces of characteristic information in Table 7 is not limited. In addition to the content shown in Table 7, one or more other types, subtypes, pieces of characteristic information, and the like may be further included. This is not limited.

Based on this possible implementation, when the terminal is rejected to access the first cell, the terminal may determine, based on the characteristic information of terminals and related information of the second cell, a neighboring cell to which the terminal is allowed to access, and access the neighboring cell. This resolves a problem of large power consumption caused by blindly searching for an accessible neighboring cell around the first cell for many times by the terminal when the terminal is rejected to access the first cell, and reduces the power consumption of the terminal.

With reference to the communication system shown in FIG. 3, the following describes in detail the method shown in FIG. 5 by using an example in which the neighboring cell of the first cell is a second cell, the network device covering the first cell is a first network device, the network device covering the second cell is a second network device, and first information and second information in FIG. 5 are carried in a SIB and sent to a terminal.

FIG. 6a is a flowchart of an access method according to an embodiment of this application. As shown in FIG. 6a, the method includes the following steps.

Step 601a: The second network device sends related information of the second cell to the first network device, and the first network device receives the related information of the second cell.

The related information of the second cell may that described above. In addition to information that indicates characteristic information of terminals allowed/disallowed to access the second cell, the related information of the second cell may further include an identifier of the second cell, access frequency information of the second cell, an access priority of the second cell, and the like. This is not limited.

For example, the second network device may send the related information of the second cell to the first network device through an interface between the second network device and the first network device, for example, an Xn interface.

Step 602a: The first network device sends an SSB to the terminal in the first cell.

For step 602a, refer to the foregoing process in which the network device sends an SSB in an initial access procedure as described above. Details are not described again.

Step 603a: The terminal searches for the SSB, and obtains a PBCH from the found SSB.

Step 604a: The terminal obtains a MIB from the PBCH, and determines a CSS and CORESET #0 based on an indication of the MIB.

Step 605a: The first network device sends DCI on a resource indicated by the CSS and CORESET #0, where the DCI is used for scheduling a PDSCH carrying a SIB.

In this embodiment of this application, the first network device determines the resource for sending the DCI, and may indicate the resource to the terminal by using the CSS and CORESET #0. When the first network device sends the DCI, it may be considered that the DCI is sent on the determined resource or the DCI is sent on the resource indicated by the CSS and CORESET #0.

In this embodiment of this application, a parameter of the resource for sending the PDCCH (carrying the DCI) includes at least two of the following plurality of parameters: a periodicity, a frequency domain resource position, a slot in which time domain is located, a start position of a time domain symbol in a slot, a quantity of time domain symbols included in a slot, a PDCCH aggregation level, a quantity of PDCCH candidate resource positions in the resource, and the like. Some parameters may be indicated by a configuration parameter of CORESET #0, for example, at least one of the following parameters of the resource: a periodicity, a frequency domain resource position, and a quantity of time domain symbols included in a slot. Some parameters may be indicated by the CSS, for example, at least one of the following parameters of the resource: a slot in which time domain is located, a start position of a time domain symbol in a slot, a PDCCH aggregation level, and a quantity of PDCCH candidate resource positions in the resource.

Step 606a: The first network device sends, to the terminal at a time-frequency resource position indicated by the DCI, the PDSCH carrying the SIB.

In this embodiment of this application, the first network device determines the resource for sending the PDSCH, and may indicate the resource to the terminal by using the DCI. When the first network device sends the PDSCH, it may be considered that the PDSCH is sent on the determined resource, or the PDSCH is sent on the resource indicated by the DCI.

The SIB may include first information and second information. For related descriptions of the first information and the second information, refer to the descriptions in FIG. 5. Details are not described again.

Step 607a: The terminal blindly detects, in the resource determined based on the CSS and CORESET #0, the DCI sent by the first network device, and receives, based on an indication of the DCI, the PDSCH carrying the SIB, to obtain the SIB from the PDSCH.

Step 608a: The terminal determines, based on the first information included in the SIB, whether to access the first cell.

For step 608a, refer to step 503. Details are not described again.

When the terminal determines to access the first cell, the terminal initiates a random access procedure to the first network device based on the configuration information included in the SIB; otherwise, the terminal performs step 609a and step 610a.

Step 609a: When the terminal is rejected to access the first cell, the terminal stops accessing the first cell, and determines, based on the second information, to access the second cell.

That the terminal stops accessing the first cell may include: The terminal stops, based on the configuration information included in the SIB, initiating a random access procedure to the first network device.

For a procedure in which the terminal determines, based on the second information, to access the second cell, refer to the descriptions in the possible implementations of the method shown in FIG. 5. Details are not described again.

Step 610a: The terminal initiates an access procedure to the second cell.

That the terminal initiates an access procedure to the second cell may include: The terminal searches, based on the access frequency information of the second cell, for an SSB sent by the second network device in the second cell, implements initial access based on the found SSB, initiates a random access request to the second network device with reference to an existing random access procedure after the initial access succeeds, to implement random access, sets up an RRC connection to the second network device, and so on.

Based on the method shown in FIG. 6a, the network device indicates, to a terminal in a cell by using a SIB, characteristic information of terminals allowed to access the cell and information about a neighboring cell of the cell, so that the terminal determines, based on the indication of the network device and characteristic information of terminals, whether the terminal can access the cell. After the terminal is rejected to access the cell, the terminal learns a specific frequency on which the terminal searches for an SSB of the neighboring cell, and accesses the cell. In this way, the network device indicates characteristics of terminals allowed/disallowed to access a cell, so that flexibility of controlling cell access by a network side is improved, the network side can better perform service control and traffic control, and power consumption of the terminal can be reduced. In the method shown in FIG. 6a, characteristic information of terminals allowed to access a neighboring cell is indicated in a SIB, so that power consumption of an SSB frequency domain search and an access attempt of the terminal is reduced.

With reference to the communication system shown in FIG. 3, the following describes in detail the method shown in FIG. 5 by using an example in which the neighboring cell of the first cell is a second cell, the network device covering the first cell is a first network device, the network device covering the second cell is a second network device, and first information and second information in FIG. 5 are carried in DCI for scheduling a SIB and sent to a terminal.

FIG. 6b is a flowchart of an access method according to an embodiment of this application. As shown in FIG. 6b, the method includes the following steps.

Step 601b: The second network device sends related information of the second cell to the first network device, and the first network device receives the related information of the second cell.

For an execution process of step 601b, refer to the descriptions of step 601a. Details are not described again.

Step 602b: The first network device sends an SSB to the terminal in the first cell.

Step 603b: The terminal searches for the SSB, obtains a PBCH from the found SSB, obtains a MIB from the PBCH, and determines a CSS and CORESET #0 based on an indication of the MIB.

Step 604b: The first network device sends DCI to the terminal in the resource indicated by the CSS and CORESET #0.

The DCI may be used for scheduling a PDSCH carrying a SIB. The DCI may include first information and second information. For related descriptions of the first information and the second information, refer to the descriptions in FIG. 5. Details are not described again.

Step 605b: The terminal blindly detects, in the resource determined based on the CSS and CORESET #0, the DCI sent by the first network device.

Step 606b: The terminal determines, based on the first information included in the DCI, whether to access the first cell.

For step 606b, refer to step 503. Details are not described again.

When the terminal determines to access the first cell, the terminal receives the SIB at a time-frequency resource position indicated by the DCI, and initiates a random access procedure to the first network device based on the configuration information included in the SIB; otherwise, the terminal performs step 607b and step 608b.

Step 607b: When the terminal is rejected to access the first cell, the terminal stops accessing the first cell, and determines, based on the second information, to access the second cell.

That the terminal stops accessing the first cell may include: The terminal stops receiving the SIB at the time-frequency resource position indicated by the DCI. For a procedure in which the terminal determines, based on the second information, to access the second cell, refer to the descriptions in the possible implementations of the method shown in FIG. 5. Details are not described again.

Step 608b: The terminal initiates an access procedure to the second cell.

For step 608b, refer to step 610a. Details are not described again.

Based on the method shown in FIG. 6b, the network device indicates, to a terminal in a cell by using DCI for scheduling a SIB, characteristic information of terminals allowed to access the cell and information about a neighboring cell of the cell, so that the terminal determines, based on the indication of the network device and characteristic information of terminals, whether the terminal can access the cell. After the terminal is rejected to access the cell, the terminal learns a specific frequency on which the terminal searches for an SSB of the neighboring cell, and accesses the cell. In this way, the network device indicates characteristics of terminals allowed/disallowed to access a cell, so that flexibility of controlling cell access by a network side is improved, and the network side can better perform service control and traffic control. In addition, according to the method shown in FIG. 6b, after reading the DCI, the terminal may find, as soon as possible, that access of the terminal is rejected. In this case, the terminal does not need to read additional information and does not need to perform a subsequent random access procedure, so that power consumption of the terminal is reduced and signaling overheads are reduced. In addition, in the method shown in FIG. 6b, characteristic information of terminals allowed to access a neighboring cell is indicated in DCI, so that power consumption of an SSB frequency domain search and an access attempt of the terminal is reduced.

With reference to the communication system shown in FIG. 3, the following describes in detail the method shown in FIG. 5 by using an example in which the neighboring cell of the first cell is a second cell, the network device covering the first cell is a first network device, the network device covering the second cell is a second network device, and first information and second information in FIG. 5 are carried in a paging message and sent to a terminal.

FIG. 6c is a flowchart of an access method according to an embodiment of this application. As shown in FIG. 6c, the method includes the following steps.

Step 601c: The second network device sends related information of the second cell to the first network device, and the first network device receives the related information of the second cell.

For an execution process of step 601c, refer to the descriptions of step 601a. Details are not described again.

Step 602c: The first network device sends a paging message to the terminal in the first cell, and the terminal receives the paging message.

The paging message may be used to wake up/page the terminal. The paging message may include first information and second information. For related descriptions of the first information and the second information, refer to the descriptions in FIG. 5. Details are not described again.

Step 603c: The terminal determines, based on the first information included in the paging message, whether to access the first cell.

For step 603c, refer to step 503. Details are not described again.

When the terminal determines to access the first cell, the terminal is woken up, prepares to switch to connected mode, and initiates a random access procedure to the first network device; otherwise, the terminal performs step 604c and step 605c.

Step 604c: When the terminal is rejected to access the first cell, the terminal stops accessing the first cell, and determines, based on the second information, to access the second cell.

That the terminal stops accessing the first cell may include: The terminal fails to be woken up, and the terminal is in idle mode or inactive mode. For a procedure in which the terminal determines, based on the second information, to access the second cell, refer to the descriptions in the possible implementations of the method shown in FIG. 5. Details are not described again.

Step 605c: The terminal initiates an access procedure to the second cell.

For step 605c, refer to step 610a. Details are not described again.

Based on the method shown in FIG. 6c, the network device indicates, to a terminal in a cell by using a paging message, characteristic information of terminals allowed to access the cell and information about a neighboring cell of the cell, so that the terminal determines, based on the indication of the network device and characteristic information of terminals, whether the terminal can access the cell. After the terminal is rejected to access the cell, the terminal learns a specific frequency on which the terminal searches for an SSB of the neighboring cell, and accesses the neighboring cell. In this way, the network device indicates characteristics of terminals allowed/disallowed to access a cell, so that flexibility of controlling cell access by a network side is improved, and the network side can better perform service control and traffic control. In addition, according to the method shown in FIG. 6c, the terminal can find, as early as possible in a paging phase, that access of the terminal is rejected, and does not need to switch to connected mode to initiate a random access procedure, so that power consumption of the terminal is reduced and signaling overheads are reduced. In addition, in the method shown in FIG. 6c, characteristic information of terminals allowed to access a neighboring cell is indicated, so that power consumption of an SSB frequency domain search and an access attempt of the terminal is reduced.

In FIG. 5 to FIG. 6c, the access method provided in embodiments of this application is described by using examples in which the network device indicates, to a terminal in a cell by using a SIB, DCI, or a paging message, characteristic information of terminals allowed to access a cell, and the terminal determines, based on the indication of the network device, whether to access the cell. Alternatively, after identifying characteristic information of terminals, the network device may send access rejection information to the terminal. Specifically, for the process, refer to FIG. 7 to FIG. 8b-1 and FIG. 8b-2.

FIG. 7 is a flowchart of another access method according to an embodiment of this application. As shown in FIG. 7, the method includes the following steps.

Step 701: A terminal sends, in a first cell, third information to a first network device.

The third information may indicate characteristic information of the terminal. For related descriptions of the characteristic information of the terminal, refer to the foregoing term explanation part. Details are not described again.

Specifically, the third information may include the characteristic information of the terminal, or may include a type and/or a subtype corresponding to the characteristic information of the terminal, for example, include an index number of the type and/or an index number of the subtype. It should be noted that, when the third information includes the type and/or the subtype corresponding to the characteristic information of the terminal, there is a correspondence between the characteristic information of the terminal and the type and/or the subtype, and the correspondence may be specified in advance in a protocol. In this case, if the terminal further has other characteristic information in addition to the characteristic information that is specified in the protocol and that corresponds to the type and/or the subtype, the terminal may further include the type and/or the subtype and the other characteristic information in the third information, and send the third information to the network device.

In an example, the terminal may include the third information in Msg3 and send Msg3 to the first network device.

Specifically, for a sending manner, refer to the descriptions in the embodiment corresponding to the method shown in FIG. 8a-1 and FIG. 8a-2.

In another example, the terminal may include the third information in MsgA and send MsgA to the first network device.

Specifically, for a sending manner, refer to the descriptions in the embodiment corresponding to the method shown in FIG. 8b-1 and FIG. 8b-2.

In still another example, the terminal may indicate the third information of the terminal to the network device by using an access preamble.

For example, the terminal may send a preamble (preamble) to the network device on a specific transmission resource. The transmission resource corresponds to the characteristic information of the terminal, or the transmission resource corresponds to the type/subtype of the terminal. After the network device receives the preamble, the network device may determine the characteristic information of the terminal based on the transmission resource that carries the preamble, and then may determine, based on the characteristic information of the terminal, whether to allow the terminal to access the first cell.

Specifically, when the transmission resource corresponds to the characteristic information of the terminal, the network device may directly determine the characteristic information of the terminal based on the transmission resource. When the transmission resource corresponds to the type/subtype of the terminal, the terminal may determine the type/subtype of the terminal based on the transmission resource, and then determine the characteristic information of the terminal based on the correspondence between the type/subtype of the terminal and the characteristic information of the terminal shown in Table 1.

The transmission resource may include a frequency domain resource and/or a time domain resource. The frequency domain resource may include but is not limited to an uplink bandwidth part (UP BWP), and the time domain resource may include but is not limited to a random access occasion (RACH occasion, RO). A correspondence between the transmission resource and the characteristic information of the terminal may be preconfigured for the terminal or the network device. The correspondence may be pre-stored in the terminal or the network device in a table form, an array form, or another form.

For example, a transmission resource corresponds to characteristic information of a terminal. Table 8 below shows the correspondence between the transmission resource and the characteristic information of the terminal. It is assumed that terminal 1 sends a preamble to the network device by using UP BWP 1. The network device may determine, based on the correspondence shown in Table 8 below and the transmission resource UP BWP 1, that characteristic information of terminal 1 includes {MAX BW=5 MHz, MAX QAM=16, IWSN}, and further check whether the characteristic information of terminal 1 is included in the characteristic information of the terminal allowed to access the first cell. If yes, terminal 1 is allowed to access the first cell; otherwise, the terminal 1 is disallowed to access the first cell.

**Table 8**

| Transmission resource | Characteristic information of the terminal | | |
|---|---|---|---|
| | Maximum bandwidth | Maximum modulation order | Application scenario |
| UP BWP 1 | MAX BW=5 MHz | MAX QAM=16 | IWSN |
| UP BWP 2 | MAX BW=10 MHz | MAX QAM=16 | IWSN |
| UP BWP 3 | MAX BW=20 MHz | MAX QAM=16 | camera |
| UP BWP 4 | MAX BW=20 MHz | MAX QAM=64 | wearable |

It should be understood that Table 8 is merely an example table. In addition to the content shown in Table 8, other characteristic information, transmission resources, and the like of the terminal may be further included. This is not limited in this application.

For another example, the terminal sends a preamble to the network device, where the preamble belongs to a specific preamble set, and the preamble set corresponds to the characteristic information of the terminal, or the preamble set corresponds to the type/subtype of the terminal. The network device may determine the characteristic information of the terminal based on the preamble set to which the preamble belongs, and may determine, based on the characteristic information of the terminal, whether to allow the terminal to access the first cell.

Optionally, a preamble set includes one or more preambles, and the preamble set may also be referred to as at least one preamble, or one or more preambles. A quantity of preambles included in the preamble set is not limited in this application. Preambles included in different preamble sets may be used by different types of terminals. Preambles included in each preamble set, and a correspondence between the preamble set and the characteristic information of the terminal or a correspondence between the preamble set and the type/subtype of the terminal may be preconfigured for the terminal or the network device. The correspondence may be pre-stored in the terminal or the network device in a table form, an array form, or another form.

For example, a preamble set corresponds to a type/subtype of a terminal. Table 9 below shows the correspondence between the preamble set and the type/subtype of the terminal. Assuming that terminal 1 uses a preamble in preamble set 1, after the network device receives the preamble sent by terminal 1, the network device may determine, based on the correspondence shown in Table 9 below, that terminal 1 is a terminal whose type is 1 and whose subtype is 1; determine, based on Table 1, that the characteristic information of the terminal is {MAX BW=5 MHz, MAX QAM=16, IWSN}; and further check whether the characteristic information of the terminal 1 is included in the characteristic information of the terminal allowed to access the first cell. If yes, terminal 1 is allowed to access the first cell; otherwise, terminal 1 is disallowed to access the first cell.

**Table 9**

| Preamble set | Type of the terminal | Subtype |
|---|---|---|
| Preamble set 1 | 1 | 1 |
| Preamble set 2 | 1 | 2 |

It should be understood that Table 9 is merely an example table. In addition to the content shown in Table 9, another type/subtype of the terminal, a preamble set, and the like may be further included. This is not limited in this application.

Specifically, in still another example, for this manner, refer to the descriptions in the embodiment corresponding to the method shown in FIG. 8c-1 and FIG. 8c-2.

Step 702: The network device receives third information, and sends, in the first cell, a response message to the terminal.

The network device receives the third information; determines, based on the third information, whether the terminal is allowed to access the first cell; includes an indication indicating whether the terminal is allowed to access the first cell in the response message; and sends the response message to the terminal.

When determining, based on the third information, whether to allow the terminal to access the first cell, the network device may consider a service volume, a user quantity, and the like of the first cell. This depends on a specific implementation of a network device side. Details are not described. The response message may include an indicator that indicates whether the terminal is allowed to access the first cell. For example, the response message may include a binary bit. The binary bit "0" may indicate that the terminal is allowed to access the first cell, and the binary bit " 1" may indicate that the terminal is disallowed to access the first cell. Alternatively, the binary bit "1" may indicate that the terminal is allowed to access the first cell, and the binary bit "0" may indicate that the terminal is disallowed to access the first cell.

In an example, the network device includes the response message in Msg4 and sends Msg4 to the terminal. Alternatively, the network device includes the response message in DCI for scheduling Msg4, and sends the DCI to the terminal. For example, the network device may indicate, by using Msg4 or one bit in reserved (reserved) bits in the DCI for scheduling Msg4, to allow or reject the terminal to access the first cell.

Specifically, for a sending manner, refer to the descriptions in the embodiment corresponding to the method shown in FIG. 8a-1 and FIG. 8a-2.

In another example, the network device includes the response message in MsgB and sends MsgB to the terminal. Alternatively, the network device includes the response message in DCI for scheduling MsgB, and sends the DCI to the terminal. For example, the network device may indicate, by using MsgB or one bit in reserved bits in the DCI for scheduling MsgB, to allow or reject the terminal to access the first cell.

Specifically, for a sending manner, refer to the descriptions in the embodiment corresponding to the method shown in FIG. 8b-1 and FIG. 8b-2.

In still another example, when the terminal sends a preamble to the network device on a specific transmission resource, and the transmission resource corresponds to the characteristic information of the terminal or the transmission resource corresponds to the type/subtype of the terminal, or when the terminal sends, to the network device, a preamble belonging to a specific preamble set, and the preamble set corresponds to the characteristic information of the terminal or the preamble set corresponds to the type/subtype of the terminal, the network device includes the response message in Msg2 and sends Msg2 to the terminal, or the network device includes the response message in the DCI for scheduling Msg2 and sends the DCI to the terminal. For example, the network device may indicate, by using Msg2 or one bit in reserved bits in the DCI for scheduling Msg2, to allow or reject the terminal to access the first cell.

It should be understood that, in this embodiment of this application, the response message is not limited to being carried in Msg4, MsgB, Msg2, or the DCI and sent to the terminal. Alternatively, the response message may be carried in another random access response (random access response, RAR) and sent to the terminal. This is not limited.

Step 703: The terminal receives the response message from the network device.

Further, as shown in FIG. 7, the method further includes the following step:
Step 704: The terminal determines, based on the response message, whether to access the first cell.

For example, when the response message indicates that the terminal is allowed to access the first cell, the terminal determines to access the first cell, sends an RRC connection request to the first network device, and sets up the RRC connection to the first network device.

When the response message indicates that the terminal is disallowed to access the first cell, the terminal determines not to access the first cell, stops initiating an RRC connection request to the first network device, searches for a neighboring cell of the first cell, for example, a second cell, and accesses the second cell.

Based on the method provided in FIG. 7, the terminal may send the characteristic information of the terminal to the network device, so that the network device identifies a characteristic of the terminal, determines, based on the characteristic of the terminal, whether to allow access to a cell, and sends, to the terminal, information about whether access to the cell is allowed or rejected. In this case, the terminal accessing the cell is flexibly controlled, and a network side can better perform service control and traffic control.

In a feasible implementation of the method shown in FIG. 7, before step 701, the first network device may send indication information to the terminal, to indicate a specific parameter or a value of specific parameters in the characteristic information of the terminal that the terminal is to send. Specifically, the method includes: The first network device sends indication information to the terminal, and the terminal receives the indication information, where the indication information may indicate a type of a parameter included in the characteristic information.

That the terminal sends third information to the first network device in step 701 includes: The terminal sends the third information to the first network device based on the indication information.

When the third information is carried in Msg3, the indication information may be carried in Msg2, a MIB, DCI, or a SIB. The DCI is used for scheduling a SIB.

When the third information is carried in MsgA, the indication information may be carried in a MIB, DCI, or a SIB. The DCI is used for scheduling a SIB. The SIB may include configuration information of MsgA.

Further, in a possible implementation shown in FIG. 7, to reduce power consumption caused by searching for an accessible neighboring cell by the terminal when the terminal is rejected to access the first cell, the method shown in FIG. 7 may further include the following steps: The first network device sends, in the first cell, second information to the terminal, and the terminal receives the second information from the first network device.

The second information may be carried in Msg4 or MsgB and sent to the terminal. For related descriptions of the second information, refer to the descriptions in the implementation of the method shown in FIG. 5. For example, the second information may be as shown in Table 5 to Table 7 in FIG. 5. Details are not described again.

In this way, when the terminal is rejected to access the first cell, the terminal determines, based on the characteristic information of the terminal and related information of the second cell, a neighboring cell to which the terminal is allowed to access, and accesses the neighboring cell. This resolves a problem of large power consumption caused by blindly searching for an accessible neighboring cell around the first cell for many times by the terminal when the terminal is rejected to access the first cell, and reduces the power consumption of the terminal.

Further, in another possible implementation shown in FIG. 7, to identify authenticity of the network device accessed by the terminal, the method shown in FIG. 7 may further include: When the first network device rejects the terminal to access the first cell, the first network device sends an identifier of the terminal and cell information of the first cell to a second network device.

Correspondingly, when the terminal accesses the second cell, the terminal sends an identifier of the terminal and cell information of the first cell to the second network device, so that the second network device determines, based on the information sent by the terminal, authenticity of the network device accessed by the terminal before the terminal accesses the second cell. When the network device is a pseudo device, a corresponding remedy taken in time to ensure security of data transmission in a network. For example, if the cell information of the first cell received by the second network device from the first network device is different from the cell information of the first cell received by the second network device from the terminal, the second network device determines that the first network device corresponding to the first cell accessed by the terminal is a pseudo device, and sends a notification message to an administrator or a server that administrates the first network device, to notify that the first network device is a pseudo device.

The identifier of the terminal may be used to uniquely identify the terminal. The cell information of the first cell may uniquely identify the first cell, and the cell information of the first cell may be a cell ID of the first cell.

For example, the terminal may include the identifier of the terminal and the cell information of the first cell in Msg1 and send Msg1 to the second network device by using a four-step random access procedure; or may include the identifier of the terminal and the cell identifier of the first cell in MsgA and send MsgA to the second network device by using a two-step random access procedure.

It should be noted that, in the method shown in FIG. 7, the first cell may be referred to as a cell on which the terminal last camps or a last serving cell (last serving cell) before the terminal accesses the second cell.

With reference to the system shown in FIG. 3, the following describes the method shown in FIG. 7 in detail by using an example in which the third information is carried in Msg3 and the response message is carried in Msg4, that is, the method shown in FIG. 7 is performed by using a four-step random access procedure.

FIG. 8a-1 and FIG. 8a-2 are a flowchart of another access method according to an embodiment of this application. As shown in FIG. 8a-1 and FIG. 8a-2, the method includes the following steps.

Step 801a: A second network device sends related information of a second cell to a first network device, and the first network device receives the related information of the second cell.

For an execution process of step 801a, refer to the descriptions of step 601a. Details are not described again.

Step 802a: The terminal sends Msg1 to the first network device.

If a cell on which the terminal last camps exists before the terminal sends Msg1 to the first network device, Msg1 may further include cell information of the cell on which the terminal last camps, for example, a cell identifier.

Step 803a: The first network device receives Msg1, and sends Msg2 to the terminal.

Msg2 may carry indication information, and the indication information may indicate a type of a parameter included in characteristic information, so that the terminal reports, to the first network device, the characteristic information indicated by the indication information.

Step 804a: The terminal receives Msg2, and sends Msg3 to the first network device based on the indication information.

Msg3 may include third information.

The third information may indicate characteristic information of the terminal.

Specifically, for related descriptions of the third information, refer to the descriptions in FIG. 7. Details are not described again.

After receiving Msg3, the first network device may determine, based on the characteristic information of the terminal, whether to allow the terminal to access the first cell. If allowing the terminal to access the first cell, the first network device performs step 805a and step 806a. If not allowing the terminal to access the first cell, the first network device performs step 807a to step 815a.

Step 805a: The first network device receives Msg3, and sends Msg4 to the terminal, where Msg4 indicates the terminal to access the first cell.

Step 806a: The terminal receives Msg4, and accesses the first cell based on the indication of Msg4.

That the terminal accesses the first cell based on the indication of Msg4 may include: The terminal sends an RRC connection setup request to the first network device, to set up an RRC connection to the first network device.

Alternatively, step 805a and step 806a may be: After receiving Msg3, the first network device sends, to the terminal, DCI for scheduling Msg4, where the DCI may carry a response message for indicating the terminal to access the first cell. Further, the first network device sends Msg4 to the terminal at a time-frequency position indicated by the DCI. The terminal receives the DCI for scheduling Msg4, determines, based on the DCI, that the terminal is allowed to access the first cell, receives Msg4 at a time-frequency position indicated by the DCI, and accesses the first cell based on Msg4.

Step 807a: The first network device sends Msg4 to the terminal.

Msg4 may indicate that the terminal is disallowed to access the first cell. Msg4 may include second information. For related descriptions of the second information, refer to the foregoing descriptions. Details are not described again.

Alternatively, step 807a may be: After receiving Msg3, the first network device sends, to the terminal, DCI for scheduling Msg4, where the DCI may carry a response message for indicating that the terminal is disallowed to access the first cell. Further, optionally, the first network device does not send, to the terminal, a PDSCH carrying Msg4.

Step 808a: The first network device sends an identifier of the terminal and cell information of the first cell to the second network device, and the second network device receives the identifier of the terminal and the cell information of the first cell from the first network device.

For example, the first network device may send the identifier of the terminal and the cell information of the first cell to the second network device through an Xn interface. For related descriptions of the identifier of the terminal and the cell information of the first cell, refer to the foregoing descriptions. Details are not described again.

Step 809a: The terminal receives Msg4, stops accessing the first cell based on the indication of Msg4, and determines, based on the second information, to access a neighboring cell of the first cell, for example, a second cell.

For example, the terminal may stop setting up an RRC connection to the first network device, select, based on the second information, the second cell allowed to be accessed, search, based on access frequency information of the second cell, for an SSB sent by the second network device in the second cell, implement initial access based on the found SSB, initiate a random access request to the second network device after the initial access succeeds, to implement random access, set up an RRC connection to the second network device, and so on.

Step 810a: The terminal sends, in the second cell, Msg1 to the second network device.

Msg1 may include the identifier of the terminal and the cell information of the first cell.

Step 811a: The second network device receives Msg1, and determines, based on the cell information of the first cell included in Msg1 and the cell information of the first cell received in step 808a, authenticity of the first network device accessed by the terminal.

Further, optionally, if the first network device is a pseudo device, the second network device reports, to a network administrator, that the first network device is a pseudo device.

Step 812a: The second network device sends Msg2 to the terminal.

Msg2 may carry indication information, and the indication information may indicate a type of a parameter included in characteristic information, so that the terminal reports the characteristic information indicated by the indication information.

Step 813a: The terminal receives Msg2, and sends Msg3 to the second network device.

Msg3 may include third information. The third information may indicate characteristic information of the terminal.

Step 814a: The second network device sends Msg4 to the terminal, where Msg4 indicates the terminal to access the second cell.

Step 815a: The terminal receives Msg4, and sets up a connection to the second network device.

That the terminal sets up a connection to the second network device may include: The terminal sends an RRC connection setup request to the second network device, to set up an RRC connection to the second network device.

Based on the method provided in FIG. 8a-1 and FIG. 8a-2, the terminal may include the characteristic information of the terminal in Msg3 and send Msg3 to the network device, so that the network device identifies a characteristic of the terminal, determines, based on the characteristic of the terminal, whether to allow access to a cell, and sends, to the terminal, information about whether access to the cell is allowed or rejected. In this case, the terminal accessing the cell is flexibly controlled, and a network side can better perform service control and traffic control. In addition, the network device may send information about a neighboring cell to the terminal, so that when the terminal is rejected to access the cell, the terminal knows a frequency on which the terminal searches for an SSB of the neighboring cell, and accesses the neighboring cell, thereby reducing power consumption caused by blindly searching for the neighboring cell by the terminal. In addition, based on cell information that is of a cell last camped on by the terminal and that is reported by the terminal and cell information that is of the cell and that is sent by the network device in the last camped cell, a network side can determine authenticity of the network device in the last camped cell, so that network security is improved.

With reference to the system shown in FIG. 3, the following describes the method shown in FIG. 7 in detail by using an example in which the third information is carried in MsgA and the response message is carried in MsgB, that is, the method shown in FIG. 7 is performed by using a two-step random access procedure.

FIG. 8b-1 and FIG. 8b-2 are a flowchart of an access method according to an embodiment of this application. As shown in FIG. 8b-1 and FIG. 8b-2, the method includes the following steps.

Step 801b: A second network device sends related information of a second cell to a first network device, and the first network device receives the related information of the second cell.

Step 802b: The terminal sends MsgA to the first network device.

MsgA may include third information. For related descriptions of the third information, refer to the descriptions in FIG. 7. Details are not described again. If a cell on which the terminal last camps exists before the terminal sends MsgA to the first network device, MsgA may further include cell information of the cell on which the terminal last camps, for example, a cell identifier.

After receiving MsgA, the first network device may determine, based on characteristic information of the terminal, whether to allow the terminal to access a first cell. If allowing the terminal to access the first cell, the first network device performs step 803b and step 804b. If not allowing the terminal to access the first cell, the first network device performs step 805b to step 811b.

Step 803b: The first network device receives MsgA, and sends MsgB to the terminal, where MsgB indicates the terminal to access the first cell.

Step 804b: The terminal receives MsgB, and accesses the first cell based on the indication of MsgB.

That the terminal accesses the first cell based on the indication of MsgB may include: The terminal sends an RRC connection setup request to the first network device, to set up an RRC connection to the first network device.

Alternatively, step 803b and step 804b may be: After receiving MsgA, the first network device sends, to the terminal, DCI for scheduling MsgB, where the DCI may carry a response message for indicating the terminal to access the first cell. Further, the first network device sends MsgB to the terminal at a time-frequency position indicated by the DCI. The terminal receives the DCI for scheduling MsgB, determines, based on the DCI, that the terminal is allowed to access the first cell, receives MsgB at a time-frequency position indicated by the DCI, and accesses the first cell based on MsgB.

Step 805b: The first network device sends MsgB to the terminal.

MsgB may indicate that the terminal is disallowed to access the first cell. MsgB may include second information. For related descriptions of the second information, refer to the foregoing descriptions. Details are not described again.

Alternatively, step 805b may be: After receiving MsgA, the first network device sends, to the terminal, DCI for scheduling MsgB, where the DCI may carry a response message for indicating that the terminal is disallowed to access the first cell. Further, optionally, the first network device does not send, to the terminal, a PDSCH carrying MsgB.

Step 806b: The first network device sends an identifier of the terminal and cell information of the first cell to the second network device, and the second network device receives the identifier of the terminal and the cell information of the first cell from the first network device.

For example, the first network device may send the identifier of the terminal and the cell information of the first cell to the second network device through an Xn interface. For related descriptions of the identifier of the terminal and the cell information of the first cell, refer to the foregoing descriptions. Details are not described again.

Step 807b: The terminal receives MsgB, stops accessing the first cell based on the indication of MsgB, and determines, based on the second information, to access a neighboring cell of the first cell, for example, a second cell.

For example, for step 807b, refer to step 809a. Details are not described again.

Step 808b: The terminal sends, in the second cell, MsgA to the second network device.

MsgA may include third information, and the third information may indicate characteristic information of the terminal. MsgA may further include the identifier of the terminal and the cell information of the first cell.

Specifically, for a sending process in step 808b, refer to the current technologies. Details are not described again.

Step 809b: The second network device receives MsgA, and determines, based on the cell information of the first cell included in MsgA and the cell information of the first cell received in step 806b, authenticity of the first network device accessed by the terminal.

Further, optionally, if the first network device is a pseudo device, the second network device reports, to a network administrator, that the first network device is a pseudo device.

Step 810b: The second network device sends MsgB to the terminal, where MsgB indicates the terminal to access the second cell.

Step 811b: The terminal receives MsgB, and sets up a connection to the second network device.

For step 811b, refer to step 815a. Details are not described again.

Based on the method provided in FIG. 8b-1 and FIG. 8b-2, the terminal may include the characteristic information of the terminal in MsgA and send MsgA to the network device, so that the network device identifies a characteristic of the terminal, determines, based on the characteristic of the terminal, whether to allow access to a cell, and sends, to the terminal, information about whether access to the cell is allowed or rejected. In this case, the terminal accessing the cell is flexibly controlled, and a network side can better perform service control and traffic control. In addition, the network device may include information about a neighboring cell in MsgB and send MsgB to the terminal, so that when the terminal is rejected to access the cell, the terminal knows a frequency on which the terminal searches for an SSB of the neighboring cell, and accesses the neighboring cell, thereby reducing power consumption caused by blindly searching for the neighboring cell by the terminal. In addition, based on cell information that is of a cell last camped on by the terminal and that is reported by the terminal and cell information that is of the cell and that is sent by the network device in the last camped cell, a network side can determine authenticity of the network device in the last camped cell, so that network security is improved.

FIG. 8c-1 and FIG. 8c-2 are a flowchart of another access method according to an embodiment of this application. As shown in FIG. 8c-1 and FIG. 8c-2, the method includes the following steps.

Step 801c: A second network device sends related information of a second cell to a first network device, and the first network device receives the related information of the second cell.

The related information of the second cell may include characteristic information of a terminal allowed to access the second cell. For an execution process of step 801c, refer to the description of step 601a. Details are not described again.

It should be noted that step 801c is an optional step, and may be not performed.

Step 802c: The terminal sends, to the first network device by using a transmission resource, Msg1 carrying a preamble.

The preamble belongs to a preamble set corresponding to the characteristic information of the terminal or a type/subtype of the terminal; or the transmission resource corresponds to the characteristic information of the terminal or the type/subtype of the terminal.

Step 803c: The first network device receives Msg1, determines the characteristic information of the terminal, and determines, based on the characteristic information of the terminal, whether to allow the terminal to access the first cell. If allowing the terminal to access the first cell, the first network device performs step 804c and step 805c. If not allowing the terminal to access the first cell, the first network device performs step 806c to step 814c.

In an example, when the preamble carried in Msg1 belongs to the preamble set corresponding to the characteristic information of the terminal or the type/subtype of the terminal, the first network device determines the characteristic information of the terminal based on the preamble set to which the received preamble belongs.

In another example, when the transmission resource for Msg1 corresponds to the characteristic information of the terminal or the type/subtype of the terminal, the first network device determines the characteristic information of the terminal based on the transmission resource for transmitting Msg1 that carries the preamble.

Step 804c: The first network device sends Msg2 to the terminal, where Msg2 may indicate that the terminal is allowed to access the first cell.

Step 805c: The terminal receives Msg2, sends Msg3 to the first network device, receives Msg4 from the first network device, and accesses the first cell based on Msg4.

That the terminal accesses the first cell based on Msg4 may include: The terminal sends an RRC connection setup request to the first network device based on Msg4, to set up an RRC connection to the first network device.

Alternatively, step 804c and step 805c may be: After receiving Msg1, the first network device sends, to the terminal, DCI for scheduling Msg2, where the DCI may carry a response message for indicating that the terminal is allowed to access the first cell. Further, the first network device sends Msg2 to the terminal at a time-frequency position indicated by the DCI. The terminal receives the DCI for scheduling Msg2, determines, based on the DCI, that the terminal is allowed to access the first cell, and receives Msg2 at a time-frequency position indicated by the DCI.

Step 806c: The first network device sends, to the terminal, Msg2 or DCI for scheduling Msg2.

Msg2 may indicate that the terminal is disallowed to access the first cell, or the DCI for scheduling Msg2 indicates that the terminal is disallowed to access the first cell.

Further, when step 801c is performed and the first network device obtains the related information of the second cell from the second network device, Msg2 or the DCI for scheduling Msg2 may further include second information. The second information may indicate the related information of the second cell. Related descriptions of the second information are as described above. Details are not described again.

Step 807c: The first network device sends an identifier of the terminal and cell information of the first cell to the second network device, and the second network device receives the identifier of the terminal and the cell information of the first cell from the first network device.

For example, the first network device may send the identifier of the terminal and the cell information of the first cell to the second network device through an Xn interface. For related descriptions of the identifier of the terminal and the cell information of the first cell, refer to the foregoing descriptions. Details are not described again.

It should be noted that step 807c is an optional step, and may be not performed.

Step 808c: If the terminal receives Msg2 or the DCI for scheduling Msg2, and determines, based on Msg2 or the DCI for scheduling Msg2, that the terminal is disallowed to access the first cell, the terminal stops accessing the first cell.

For example, the terminal may stop setting an RRC connection to the first network device.

Further, the terminal may search for the second cell and access the second cell. For example, a process in which the terminal accesses the second cell may include: In step 806c, Msg2 or the DCI for scheduling Msg2 includes the second information. The terminal selects, based on the second information, the second cell allowed to be accessed; searches, based on access frequency information of the second cell, for an SSB sent by the second network device in the second cell; and initially accesses the second cell based on the found SSB. Alternatively, when step 801c is not performed and the first network device does not send the second information to the terminal, the terminal actively performs a cell search according to the current technologies, and accesses the second cell after finding the second cell.

Further, after the terminal initially accesses the second cell, the terminal performs the random access request shown in the following step 809c to step 814c, to implement random access, set up an RRC connection to the second network device, and so on.

Step 809c: The terminal sends, in the second cell, Msg1 to the second network device.

Msg1 may include the identifier of the terminal and the cell information of the first cell.

Step 810c: The second network device receives Msg1.

Further, when step 807c is performed, based on the identification information of the terminal and the cell information of the first cell that are included in Msg1 and the identifier of the terminal and the cell information of the first cell that are received in step 807c, the second network device determines authenticity of the first network device accessed by the terminal.

Further, optionally, if the first network device is a pseudo device, the second network device reports, to a network administrator, that the first network device is a pseudo device.

Step 811c: The second network device sends Msg2 to the terminal.

Msg2 may carry indication information, and the indication information may indicate a type of a parameter included in characteristic information, so that the terminal reports the characteristic information indicated by the indication information.

Step 812c: The terminal receives Msg2, and sends Msg3 to the second network device.

Msg3 may include third information. The third information may indicate characteristic information of the terminal.

Step 813c: The second network device sends Msg4 to the terminal, where Msg4 indicates the terminal to access the second cell.

Step 814c: The terminal receives Msg4, and sets up a connection to the second network device.

That the terminal sets up a connection to the second network device may include: The terminal sends an RRC connection setup request to the second network device, to set up an RRC connection to the second network device.

Based on the method provided in FIG. 8c-1 and FIG. 8c-2, the characteristic information of the terminal corresponds to the preamble set or the transmission resource for transmitting Msg1, so that after receiving Msg1, the network device can identify a characteristic of the terminal, determine, based on the characteristic of the terminal, whether to allow the terminal to access a cell, and send, to the terminal in advance, information about a cell allowed or rejected to be accessed. In this case, a random access procedure is stopped as soon as possible when the terminal is rejected to access the cell, power consumption caused by accessing the first cell by the terminal is reduced, the terminal accessing the cell is flexibly controlled, a network side can better perform service control and traffic control. In addition, the network device may send information about a neighboring cell to the terminal, so that when the terminal is rejected to access the cell, the terminal knows a frequency on which the terminal searches for an SSB of the neighboring cell, and accesses the neighboring cell, thereby reducing power consumption caused by blindly searching for the neighboring cell by the terminal. In addition, based on cell information that is of a cell last camped on by the terminal and that is reported by the terminal and cell information that is of the cell and that is sent by the network device in the last camped cell, a network side can determine authenticity of the network device in the last camped cell, so that network security is improved.

The foregoing mainly describes the solutions provided in embodiments of this application from a perspective of interaction between nodes. It can be understood that, to implement the foregoing functions, the nodes such as the network device and the terminal include corresponding hardware structures and/or software modules for executing the functions. A person skilled in the art should easily be aware that, in combination with the examples described in embodiments disclosed in this specification, algorithm steps may be implemented by hardware or software or a combination of hardware and computer software in the methods in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device or the terminal may be obtained through division based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 9 is a structural diagram of a communication apparatus 90. The communication apparatus 90 may be a terminal, a chip in the terminal, a system-on-a-chip, another apparatus that can implement the functions of the terminal in the foregoing methods, or the like. The communication apparatus 90 may be configured to perform the functions of the terminal in the foregoing method embodiments. In a feasible implementation, the communication apparatus 90 shown in FIG. 9 includes a receiving unit 901, a processing unit 902, and a sending unit 903.

In a possible design, the receiving unit 901 is configured to receive, in a first cell, first information that is from a network device and that indicates characteristic information of terminals allowed to access the first cell. For example, the receiving unit 901 is configured to support the communication apparatus 90 in performing step 502, step 607a, step 605b, and step 602c.

The processing unit 902 is configured to determine, based on the first information, whether to access the first cell. For example, the processing unit 902 is configured to support the communication apparatus 90 in performing step 503, step 608a, step 606b, and step 603c.

Specifically, all related content of the steps in the method embodiments shown in FIG. 5 to FIG. 6c may be cited in function descriptions of corresponding function modules. Details are not described herein again. The communication apparatus 90 is configured to perform the functions of the terminal in the access methods shown in FIG. 5 to FIG. 6c, and therefore can achieve a same effect as the foregoing access methods.

In another possible design, the sending unit 903 is configured to send, in the first cell to a first network device, third information that indicates characteristic information of a terminal. For example, the sending unit 903 is configured to support the communication apparatus 90 in performing step 701, step 804a, and step 802b.

The receiving unit 901 is configured to receive, in the first cell, a response message that is from the first network device and that indicates whether the terminal is allowed to access the first cell. For example, the receiving unit 901 is configured to support the communication apparatus 90 in performing step 703, step 806a, and step 804b.

Specifically, all related content of the steps in the method embodiments shown in FIG. 7 to FIG. 8b-1 and FIG. 8b-2 may be cited in function descriptions of corresponding function modules. Details are not described herein again. The communication apparatus 90 is configured to perform the functions of the terminal in the access methods shown in FIG. 7 to FIG. 8b-1 and FIG. 8b-2, and therefore can achieve a same effect as the foregoing access methods.

In another feasible implementation, the communication apparatus 90 shown in FIG. 9 includes a processing module and a communication module. The processing module is configured to control and manage an action of the communication apparatus 90. For example, the processing module may integrate a function of the processing unit 902, and may be configured to support the communication apparatus 90 in performing step 503, step 608a, step 606b, step 602c, and another process of the technology described in this specification. The communication module may integrate functions of the sending unit 901 and the receiving unit 903, and may be configured to support the communication apparatus 90 in performing steps such as step 502, step 701, and step 703 and communicating with another network entity, for example, communicating with a function module or a network entity shown in FIG. 3. The communication apparatus 90 may further include a storage module, configured to store instructions and/or data. When the instructions are executed by the processing module, the processing module may be enabled to implement the foregoing methods on the terminal side.

The processing module may be a processor, a controller, a module, or a circuit. The processing module may implement or execute various example logical blocks described with reference to content disclosed in this application. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 90 in this embodiment of this application may be the communication apparatus shown in FIG. 4.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory may be a non-transitory memory, such as a hard disk drive (hard disk drive, HDD) or a solid-state drive (solid-state drive, SSD), or may be a transitory memory (transitory memory), such as a random access memory (random access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store instructions and/or data.

FIG. 10 is a structural diagram of a communication apparatus 100. The communication apparatus 100 may be a network device, a chip in the network device, a system-on-a-chip, another apparatus that can implement the functions of the network device in the foregoing methods, or the like. The communication apparatus 100 may be configured to perform the functions of the network device in the foregoing method embodiments. In a feasible implementation, the communication apparatus 100 shown in FIG. 10 includes a receiving unit 1001 and a sending unit 1002.

In a possible design, the sending unit 1002 is configured to send, in a first cell to a terminal, first information that indicates characteristic information of terminals allowed to access the first cell. For example, the sending unit 1002 is configured to support the communication apparatus 100 in performing step 501, step 606a, step 604b, and step 602c.

Specifically, all related content of the steps in the method embodiments shown in FIG. 5 to FIG. 6c may be cited in function descriptions of corresponding function modules. Details are not described herein again. The communication apparatus 100 is configured to perform the functions of the network device in the access methods shown in FIG. 5 to FIG. 6c, and therefore can achieve a same effect as the foregoing access methods.

In another possible design, the receiving unit 1001 is configured to receive, in a first cell, third information that is from a terminal and that indicates characteristic information of the terminal. For example, the receiving unit 1001 is configured to support the communication apparatus 100 in performing the actions of receiving the third information in step 702, step 805a, and step 803b.

The sending unit 1002 is configured to send, in the first cell to the terminal, a response message that indicates whether the terminal is allowed to access the first cell. For example, the sending unit 1002 is configured to support the communication apparatus 100 in performing the actions of sending the response message in step 702, step 805a, and step 803b.

The communication apparatus 100 may further include a processing unit, configured to process information received from the apparatus, and/or configured to generate information to be sent to another apparatus.

Specifically, all related content of the steps in the method embodiments shown in FIG. 7 to FIG. 8b-1 and FIG. 8b-2 may be cited in function descriptions of corresponding function modules. Details are not described herein again. The communication apparatus 100 is configured to perform the functions of the network device in the access methods shown in FIG. 7 to FIG. 8b-1 and FIG. 8b-2, and therefore can achieve a same effect as the foregoing access methods.

In another feasible implementation, the communication apparatus 100 shown in FIG. 10 includes a processing module and a communication module. The processing module is configured to control and manage an action of the communication apparatus 100. For example, the processing module may integrate a function of the processing unit, and may be configured to support the communication apparatus 100 in performing an action of the network device described in this specification other than a receiving or sending action. The communication module may integrate functions of the receiving unit 1001 and the sending unit 1002, and may be configured to support the communication apparatus 100 in performing step 702, step 805a, and step 803b and communicating with another network entity, for example, communicating with a function module or a network entity shown in FIG. 3. The communication apparatus 100 may further include a storage module, configured to store instructions and/or data of the communication apparatus 100. When the instructions are executed by the processing module, the processing module may be enabled to implement the foregoing methods on the terminal side.

The processing module may be a processor, a controller, a module, or a circuit. The processing module may implement or execute various example logical blocks described with reference to content disclosed in this application. Alternatively, the processor may be a combination of processors implementing a computing function, for example, a combination of one or more microprocessors, or a combination of the DSP and a microprocessor. The communication module may be a transceiver circuit, a pin, an interface circuit, a bus interface, a communication interface, or the like. The storage module may be a memory. When the processing module is the processor, the communication module is the communication interface, and the storage module is the memory, the communication apparatus 100 in this embodiment of this application may be the communication apparatus shown in FIG. 4.

FIG. 11 is a structural diagram of a communication system according to an embodiment of this application. As shown in FIG. 11, the communication system may include a plurality of terminals 110 and a plurality of network devices 111.

The terminal 110 may have the functions of the communication apparatus 90. The network device 111 may have the functions of the communication apparatus 100.

For example, the network device 111 is configured to send, in a first cell to the terminal 110, first information that indicates characteristic information of terminals allowed to access the first cell.

The terminal 110 is configured to: receive, in the first cell, the first information from the network device 111, and determine, based on the first information, whether to access the first cell. When determining that the terminal 110 is allowed to access the first cell, the terminal 110 initiates an access procedure, and accesses the first cell. Alternatively, when determining that the terminal 110 is disallowed to access the first cell, the terminal 110 stops accessing the first cell, and accesses a neighboring cell of the first cell, for example, a second cell.

For another example, the terminal 110 is configured to send, in the first cell to a first network device 111, third information that indicates characteristic information of the terminal 110.

The network device 111 is configured to: receive, in the first cell, the third information from the terminal 110, and send, in the first cell to the terminal 110 based on the third information, a response message that indicates whether the terminal 110 is allowed to access the first cell.

The terminal 110 is further configured to receive, in the first cell, the response message from the first network device 111. When the terminal 110 is allowed to access the first cell, the terminal 110 initiates an access procedure, and accesses the first cell. Alternatively, when the terminal 110 is disallowed to access the first cell, the terminal 110 stops accessing the first cell, and accesses a neighboring cell of the first cell, for example, a second cell.

Specifically, for a specific implementation process of the terminal 110, refer to the execution process of the terminal in the method embodiments in FIG. 5 to FIG. 8b-1 and FIG. 8b-2. Details are not described herein again. For a specific implementation process of the network device 111, refer to the execution process of the network device 111 in the method embodiments in FIG. 5 to FIG. 8b-1 and FIG. 8b-2. Details are not described herein again.

Embodiments of this application further provide a computer-readable storage medium. All or some of the processes in the foregoing method embodiments may be completed by a computer program instructing related hardware. The program may be stored in the foregoing computer-readable storage medium. When the program is executed, the processes of the foregoing method embodiments may be performed. The computer-readable storage medium may be an internal storage unit of the terminal apparatus (for example, including a data transmit end and/or a data receive end) in any one of the foregoing embodiments, for example, a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, a flash card (flash card), or the like that is configured on the terminal apparatus. Further, the computer-readable storage medium may include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be implemented by related hardware (such as a computer, a processor, a network device, and a terminal) instructed by the computer instructions. The program may be stored in the foregoing computer-readable storage medium.

It should be noted that, in the specification, claims, and accompanying drawings of this application, terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be understood that in embodiments of this application, "B corresponding to A" indicates that B is associated with A. For example, B may be determined based on A. However, it should be further understood that determining B based on A does not mean that B is determined based only on A. B may alternatively be determined based on A and/or other information. In addition, in embodiments of this application, "connection" means various connection manners such as a direct connection or an indirect connection, for implementing communication between devices. This is not limited in embodiments of this application.

Unless otherwise specified, "transmit/transmission" (transmit/transmission) in embodiments of this application refers to bidirectional transmission, and includes a sending action and/or a receiving action. Specifically, "transmit/transmission" in embodiments of this application includes data sending, data receiving, or data sending and data receiving. In other words, data transmission herein includes uplink and/or downlink data transmission. The data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" convey a same concept, and a communication system is a communication network.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed at different places. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device, where for example, the device may be a single-chip microcomputer or a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An access method applied for a wireless terminal, a chip for the wireless terminal, or a module for the wireless terminal, wherein the method comprises:
receiving (502), in a first cell, first information from a network device, wherein the first information comprises one or more of following information: characteristic information of wireless terminals allowed to access the first cell, characteristic information of wireless terminals disallowed to access the first cell, wherein the characteristic information comprises a value of the following parameter of wireless terminals: a branch quantity; and
determining (503), based on the first information, whether to access the first cell.

2. An access method applied for a network device, a chip for the network device, or a module for the network device, wherein the method comprises:
sending (501), in a first cell, first information to a wireless terminal, wherein the first information comprises one or more of following information: characteristic information of wireless terminals allowed to access the first cell, characteristic information of wireless terminals disallowed to access the first cell, wherein the characteristic information comprises a value of the following parameter of wireless terminals: a branch quantity.

3. The method according to claim 1 or 2, wherein
the first information is carried in a system information block, SIB;
the first information is carried in a paging message; or
the first information is carried in downlink control information, DCI, and the DCI is used for scheduling a SIB.

4. The method according to any one of claims 1 to 3, wherein the characteristic information corresponds to a type of wireless terminals;
the first information comprises a type of wireless terminals allowed to access the first cell; and/or
the first information comprises a type of wireless terminals disallowed to access the first cell.

5. The method according to any one of claims 1 to 4, wherein the characteristic information further comprises a value of the following parameter of wireless terminals: a duplex capability.

6. The method according to claim 5, wherein the duplex capability is half-duplex frequency division duplex, FDD, capability.

7. An access method applied for a wireless terminal, a chip for the wireless terminal, or a module for the wireless
terminal, wherein the method comprises:
sending (701), in a first cell, third information to a first network device, wherein the third information indicates characteristic information of the wireless terminal, wherein the characteristic information comprises a value of the following parameter of the wireless terminal: a branch quantity; and
receiving (703), in the first cell, a response message from the first network device, wherein the response message indicates whether the wireless terminal is allowed to access the first cell.

8. An access method applied for a network device, a chip for the network device, or a module for the network device, wherein the method comprises:
receiving (701), in a first cell, third information from a wireless terminal, wherein the third information indicates characteristic information of the wireless terminal, wherein the characteristic information comprises a value of the following parameter of the wireless terminal: a branch quantity; and
sending (702), in the first cell, a response message to the terminal based on the third information, wherein the response message indicates whether the wireless terminal is allowed to access the first cell.

9. The method according to claim 7 or 8, wherein
the third information is carried in Msg3, and the response message is carried in Msg4 or carried in downlink control information, DCI, for scheduling Msg4; or
the third information is carried in MsgA, and the response message is carried in MsgB or carried in DCI for scheduling MsgB.

10. The method according to any one of claims 7 to 9, wherein the characteristic information further comprises a value of the following parameter of the wireless terminal: a duplex capability.

11. The method according to claim 10, wherein the duplex capability is half-duplex frequency division duplex, FDD, capability.

12. A communication apparatus, configured to perform the access method according to any one of claims 1, and 3 to 6 or the access method according to any one of claims 7, and 9 to 11.

13. A communication apparatus, configured to perform the access method according to any one of claims 2 to 6, or the access method according to any one of claims 8 to 11.

14. A computer-readable storage medium, wherein the computer-readable storage medium stores computer instructions, and when the computer instructions are run on a computer, the computer is enabled to perform the access method according to any one of claims 1, 3 to 6, 7 or 9 to 11 when the computer is comprised in a wireless terminal, or the access method according to any one of claims 2 to 6 or 8 to 11 when the computer is comprised in a network device.

15. A computer program product, wherein the computer program product comprises computer instructions, and when the computer instructions are run on a computer, the computer is enabled to perform the access method according to any one of claims 1, 3 to 6, 7 or 9 to 11 when the computer is comprised in a wireless terminal, or the access method according to any one of claims 2 to 6 or 8 to 11 when the computer is comprised in a network device.

## Patentansprüche

1. Für ein drahtloses Endgerät angewendetes Zugriffsverfahren, Chip für das drahtlose Endgerät oder Modul für das drahtlose Endgerät, wobei das Verfahren Folgendes umfasst:
Empfangen (502) erster Informationen von einer Netzwerkvorrichtung in einer ersten Zelle, wobei die ersten Informationen eine oder mehrere folgender Informationen umfassen: charakteristische Informationen von drahtlosen Endgeräten, die auf die erste Zelle zugreifen dürfen, charakteristische Informationen von drahtlosen Endgeräten, die nicht auf die erste Zelle zugreifen dürfen, wobei die charakteristischen Informationen einen Wert des folgenden Parameters von drahtlosen Endgeräten umfassen: eine Zweigmenge; und
Bestimmen (503) basierend auf den ersten Informationen, ob auf die erste Zelle zugegriffen werden soll.

2. Für eine Netzwerkvorrichtung angewendetes Zugriffsverfahren, Chip für die Netzwerkvorrichtung oder Modul für die Netzwerkvorrichtung, wobei das Verfahren Folgendes umfasst:
Senden (501) erster Informationen in einer ersten Zelle an ein drahtloses Endgerät, wobei die ersten Informationen eine oder mehrere folgender Informationen umfassen: charakteristische Informationen von drahtlosen Endgeräten, die auf die erste Zelle zugreifen dürfen, charakteristische Informationen von drahtlosen Endgeräten, die nicht auf die erste Zelle zugreifen dürfen, wobei die charakteristischen Informationen einen Wert des folgenden Parameters von drahtlosen Endgeräten umfassen: eine Zweigmenge.

3. Verfahren nach Anspruch 1 oder 2, wobei
die ersten Informationen in einem Systeminformationsblock, SIB, übertragen werden;
die ersten Informationen in einer Funkrufnachricht übertragen werden; oder
die ersten Informationen in Downlink-Steuerinformationen, DCI, übertragen werden und die DCI zum Planen eines SIB verwendet werden.

4. Verfahren nach einem der Ansprüche 1 bis 3, wobei die charakteristischen Informationen einem Typ von drahtlosen Endgeräten entsprechen;
die ersten Informationen einen Typ von drahtlosen Endgeräten umfassen, die auf die erste Zelle zugreifen dürfen; und/oder
die ersten Informationen einen Typ von drahtlosen Endgeräten umfassen, die nicht auf die erste Zelle zugreifen dürfen.

5. Verfahren nach einem der Ansprüche 1 bis 4, wobei die charakteristischen Informationen ferner einen Wert des folgenden Parameters von drahtlosen Endgeräten umfassen: eine Duplexfähigkeit.

6. Verfahren nach Anspruch 5, wobei die Duplexfähigkeit eine Halbduplex-Frequenzduplexfähigkeit, Halbduplex-FDD-Fähigkeit, ist.

7. Für ein drahtloses Endgerät angewendetes Zugriffsverfahren, Chip für das drahtlose Endgerät oder Modul für das drahtlose Endgerät, wobei das Verfahren Folgendes umfasst:
Senden (701) von dritten Informationen in einer ersten Zelle an eine erste Netzwerkvorrichtung, wobei die dritten Informationen charakteristische Informationen des drahtlosen Endgeräts angeben, wobei die charakteristischen Informationen einen Wert des folgenden Parameters des drahtlosen Endgeräts umfassen: eine Zweigmenge; und
Empfangen (703) einer Antwortnachricht von der ersten Netzwerkvorrichtung in der ersten Zelle, wobei die Antwortnachricht angibt, ob das drahtlose Endgerät auf die erste Zelle zugreifen darf.

8. Für eine Netzwerkvorrichtung angewendetes Zugriffsverfahren, Chip für die Netzwerkvorrichtung oder Modul für die Netzwerkvorrichtung, wobei das Verfahren Folgendes umfasst:
Empfangen (701) von dritten Informationen von einem drahtlosen Endgerät in einer ersten Zelle, wobei die dritten Informationen charakteristische Informationen des drahtlosen Endgeräts angeben, wobei die charakteristischen Informationen einen Wert des folgenden Parameters des drahtlosen Endgeräts umfassen: eine Zweigmenge; und
Senden (702) einer Antwortnachricht in der ersten Zelle an das Endgerät basierend auf den dritten Informationen, wobei die Antwortnachricht angibt, das drahtlose Endgerät auf die erste Zelle zugreifen darf.

9. Verfahren nach Anspruch 7 oder 8, wobei
die dritten Informationen in Msg3 übertragen werden und die Antwortnachricht in Msg4 übertragen wird oder in Downlink-Steuerinformationen, DCI, zur Planung von Msg4 übertragen wird; oder
die dritten Informationen in MsgA übertragen werden und die Antwortnachricht in MsgB übertragen wird oder in DCI zur Planung von MsgB übertragen wird.

10. Verfahren nach einem der Ansprüche 7 bis 9, wobei die charakteristischen Informationen ferner einen Wert des folgenden Parameters des drahtlosen Endgeräts umfassen: eine Duplexfähigkeit.

11. Verfahren nach Anspruch 10, wobei die Duplexfähigkeit eine Halbduplex-Frequenzduplexfähigkeit, Halbduplex-FDD-Fähigkeit, ist.

12. Kommunikationsvorrichtung, die dazu konfiguriert ist, das Zugriffsverfahren nach einem der Ansprüche 1 und 3 bis 6 oder das Zugriffsverfahren nach einem der Ansprüche 7 und 9 bis 11 durchzuführen.

13. Kommunikationsvorrichtung, die dazu konfiguriert ist, das Zugriffsverfahren nach einem der Ansprüche 2 bis 6 oder das Zugriffsverfahren nach einem der Ansprüche 8 bis 11 durchzuführen.

14. Computerlesbares Speichermedium, wobei das computerlesbare Speichermedium Computeranweisungen speichert, und wenn die Computeranweisungen auf einem Computer ausgeführt werden, der Computer dazu in der Lage ist, das Zugriffsverfahren nach einem der Ansprüche 1, 3 bis 6, 7 oder 9 bis 11 durchzuführen, wenn der Computer in einem drahtlosen Endgerät enthalten ist, oder das Zugriffsverfahren nach einem der Ansprüche 2 bis 6 oder 8 bis 11 durchzuführen, wenn der Computer in einer Netzwerkvorrichtung enthalten ist.

15. Computerprogrammprodukt, wobei das Computerprogrammprodukt Computeranweisungen umfasst, und wenn die Computeranweisungen auf einem Computer ausgeführt werden, der Computer dazu in der Lage ist, das Zugriffsverfahren nach einem der Ansprüche 1, 3 bis 6, 7 oder 9 bis 11 durchzuführen, wenn der Computer in einem drahtlosen Endgerät enthalten ist, oder das Zugriffsverfahren nach einem der Ansprüche 2 bis 6 oder 8 bis 11 durchzuführen, wenn der Computer in einer Netzwerkvorrichtung enthalten ist.

## Revendications

1. Procédé d'accès appliqué à un terminal sans fil, à une puce pour un terminal sans fil ou à un module pour le terminal sans fil, dans lequel le procédé comprend :
la réception (502), dans une première cellule, de premières informations provenant d'un dispositif réseau, dans lequel les premières informations comprennent une ou plusieurs des informations suivantes : des informations caractéristiques de terminaux sans fil autorisés à accéder à la première cellule, des informations caractéristiques de terminaux sans fil interdites d'accéder à la première cellule, dans lequel les informations caractéristiques comprennent une valeur du paramètre suivant de terminaux sans fil : une quantité de branchements ; et
le fait de déterminer (503), sur la base des premières informations, s'il faut accéder à la première cellule.

2. Procédé d'accès appliqué à un dispositif réseau, à une puce pour un dispositif réseau ou à un module pour le dispositif réseau, dans lequel le procédé comprend :
l'envoi (501), dans une première cellule, de premières informations provenant d'un dispositif réseau, dans lequel les premières informations comprennent une ou plusieurs des informations suivantes : des informations caractéristiques de terminaux sans fil autorisés à accéder à la première cellule, des informations caractéristiques de terminaux sans fil interdites d'accéder à la première cellule, dans lequel les informations caractéristiques comprennent une valeur du paramètre suivant de terminaux sans fil : une quantité de branchements.

3. Procédé selon la revendication 1 ou 2, dans lequel les premières informations sont transportées dans un bloc d'informations système, SIB ;
les premières informations sont transportées dans un message de radiomessagerie ; ou
les premières informations sont transportées dans des informations de commande de liaison descendante, DCI, et les DCI sont utilisées pour planifier un SIB.

4. Procédé selon l'une quelconque des revendications 1 à 3, dans lequel les informations caractéristiques correspondent à un type de terminaux sans fil ;
les premières informations comprennent un type de terminaux sans fil autorisés à accéder à la première cellule ; et/ou
les premières informations comprennent un type de terminaux sans fil interdits d'accéder à la première cellule.

5. Procédé selon l'une quelconque des revendications 1 à 4, dans lequel les informations caractéristiques comprennent en outre une valeur du paramètre suivant des terminaux sans fil : une capacité duplex.

6. Procédé selon la revendication 5, dans lequel la capacité duplex est une capacité de duplexage par répartition en fréquence semi-duplex, FDD.

7. Procédé d'accès appliqué à un terminal sans fil, à une puce pour le terminal sans fil ou à un module pour le terminal sans fil, dans lequel le procédé comprend :
l'envoi (701), dans une première cellule, de troisièmes informations à un premier dispositif réseau, dans lequel les troisièmes informations indiquent des informations caractéristiques du terminal sans fil, dans lequel les informations caractéristiques comprennent une valeur du paramètre suivant du terminal sans fil : une quantité de branchement ; et
la réception (703), dans la première cellule, d'un message de réponse provenant du premier dispositif réseau, dans lequel le message de réponse indique si le terminal sans fil est autorisé à accéder à la première cellule.

8. Procédé d'accès appliqué à un dispositif réseau, à une puce pour un dispositif réseau ou à un module pour le dispositif réseau, dans lequel le procédé comprend :
la réception (701), dans une première cellule, de troisièmes informations provenant d'un terminal sans fil, dans lequel les troisièmes informations indiquent des informations caractéristiques du terminal sans fil, dans lequel les informations caractéristiques comprennent une valeur du paramètre suivant du terminal sans fil : une quantité de branchement ; et
l'envoi (702), dans la première cellule, d'un message de réponse au terminal sur la base des troisièmes informations, dans lequel le message de réponse indique si le terminal sans fil est autorisé à accéder à la première cellule.

9. Procédé selon la revendication 7 ou 8, dans lequel
les troisièmes informations sont transportées dans Msg3, et le message de réponse est transporté dans Msg4 ou transporté dans des informations de commande de liaison descendante, DCI, pour planifier Msg4 ; ou
les troisièmes informations sont transportées dans MsgA, et le message de réponse est transporté dans MsgB ou transporté dans les DCI pour planifier MsgB.

10. Procédé selon l'une quelconque des revendications 7 à 9, dans lequel les informations caractéristiques comprennent en outre une valeur du paramètre suivant du terminal sans fil : une capacité duplex.

11. Procédé selon la revendication 10, dans lequel la capacité duplex est une capacité de duplexage par répartition en fréquence semi-duplex, FDD.

12. Appareil de communication, configuré pour mettre en œuvre le procédé d'accès selon l'une quelconque des revendications 1 et 3 à 6 ou l'une quelconque des revendications 7 et 9 à 11.

13. Appareil de communication, configuré pour mettre en œuvre le procédé d'accès selon l'une quelconque des revendications 2 à 6 ou l'une quelconque des revendications 8 à 11.

14. Support de stockage lisible par ordinateur, dans lequel le support de stockage lisible par ordinateur stocke des instructions informatiques, et lorsque les instructions informatiques sont exécutées sur un ordinateur, l'ordinateur est activé pour mettre en œuvre le procédé d'accès selon l'une quelconque des revendications 1, 3 à 6, 7 ou 9 à 11 lorsque l'ordinateur est compris dans un terminal sans fil, ou procédé d'accès selon l'une quelconque des revendications 2 à 6 ou 8 à 11 lorsque l'ordinateur est compris dans un dispositif réseau.

15. Produit de programme informatique, dans lequel le produit de programme informatique comprend des instructions informatiques, et lorsque les instructions informatiques sont exécutées sur un ordinateur, l'ordinateur est activé pour mettre en œuvre le procédé d'accès selon l'une quelconque des revendications 1, 3 à 6, 7 ou 9 à 11 lorsque l'ordinateur est compris dans un terminal sans fil, ou procédé d'accès selon l'une quelconque des revendications 2 à 6 ou 8 à 11 lorsque l'ordinateur est compris dans un dispositif réseau.
